# EUROPÄISCHE PATENTSCHRIFT

(11) **EP 2 418 028 B1**
(45) Veröffentlichungstag und Bekanntmachung des Hinweises auf die Patenterteilung: **14.08.2013**
(21) Anmeldenummer: 10184030.4
(22) Anmeldetag: 30.09.2010
(51) Int. Cl.: B21D 13/04, B21D 13/10, B29C 53/24, B29C 70/50, B29C 70/88

(54) **Verfahren zum mehrdimensional Strukturieren einer flachen Materialbahn**
Method for multi-dimensional structuring of a flat sheet of material
Procédé de structuration pluridimensionnel d'une bande de matériau plate

(30) Priorität: 12.08.2010 DE 102010034076
(43) Veröffentlichungstag der Anmeldung: 15.02.2012
(73) Patentinhaber: Dr. Mirtsch GmbH, 14532 Stahnsdorf (DE)
(72) Erfinder: Mirtsch, Frank, 13465 Berlin (DE); Mirtsch, Schokufeh, 13465 Berlin (DE); Mirtsch, Michael, 14513 Teltow (DE); Kurzweg, Eberhard, 14513 Teltow (DE)
(74) Vertreter: Bittner, Thomas L.

(56) Entgegenhaltungen:
- EP-A2- 1 839 843
- DE-A1- 19 651 937
- DE-A1-102004 044 550
- DE-A1-102005 041 516
- FR-A- 1 089 219
- US-A- 2 441 476

## Beschreibung

Die Erfindung betrifft Technologien auf dem Gebiet des mehrdimensionalen Strukturierens einer flachen Materialbahn.

### Hintergrund der Erfindung

Zukünftig werden mehr Leichtbauteile, insbesondere im Fahrzeugbau, im Bauwesen sowie im Maschinen- und Apparatebau gebraucht, um Ressourcen an Energie und Werkstoffen einzusparen. Hierzu benötigt man dünne Materialbahnen, die nicht nur versteift werden, sondern noch weitere vorteilhafte Eigenschaften in ihrer Funktion aufweisen. Zu diesen zusätzlich gewünschten Funktionseigenschaften gehören beispielsweise dynamische Eigenschaften, wie eine hohe und gleichmäßige Energieaufnahme von Karosserieteilen beim Belastungs- bzw. Crashfall, wie beim Kopfaufprall eines Fußgängers auf eine Motorhaube oder einen Kotflügel. Hierbei ist eine plastische Verformung des betroffenen Bereiches der Motorhaube, insbesondere der Verstärkungsschale, erwünscht, damit der Kopf gleichmäßig und möglichst rückfederungsarm und somit körperverträglich abgebremst werden kann.

Ferner soll beispielsweise die Rücklehne einer Sitzbank nicht nur leicht und formstabil sein, sondern auch die Aufprallenergie beispielsweise eines transportierten Gegenstandes, wie eines Getränkekastens im Heckraum, körperverträglich für die Insassen aufnehmen können und ferner schalldämpfend sein.

Ferner sind Sandwichkonstruktionen aus dünnwandigen, mehrdimensional strukturierten und glatten Materialien erwünscht, die sehr leicht und formsteif sind und eine hohe Deformations- bzw. Crashenergie aufnehmen können. Auch wird gewünscht, dass mehrdimensional versteifte Materialbahnen, flache Schalen oder Profile ohne aufwändige Umformmaschinen und ohne komplizierte Formwerkzeuge und mit möglichst geringer Plastifizierung des Bahnwerkstoffes hergestellt werden können.

Schließlich sollen auch attraktive Leichtbaumaterialien und -bauteile, insbesondere aus hoch-und höchstfestem Stahlblech, hochfesten Aluminiumlegierungen, wie "Titanal" (mit einer Streckgrenze von ca. 550 N / mm²), bis hin zu faserverstärkten Kunststoffen, und ferner Lochbleche, die in der Regel allesamt nur über geringe Dehngrenzen verfügen und bei der Umformung leicht reißen können, mit mehrdimensional versteifenden Strukturen ausgestattet werden können. Schließlich sind strukturierte, dünnwandige Profile wünschenswert, die sich sehr formsteif bei Belastungen, insbesondere beim Aufbiegen der Profilflanken und bei der Torsion, verhalten.

Es sind höckerförmig strukturierte Bleche bekannt, bei denen napfförmige Strukturen durch einen im Wesentlichen streckziehenden Umformprozess mit Hilfe von zwei mechanischen Formwerkzeugen, wie Formstempel und Formmatrize, oder eines Formwerkzeuges und eines Wirkmediums, in eine Blechbahn eingeformt werden. Unbefriedigend sind hierbei zwei Effekte: Erstens lässt sich eine deutliche Verbesserung der Biegesteifigkeit einer mit Höckern ausgestatteten Blechplatine nicht erzielen, weil die Blechbereiche zwischen den Höckern eben bleiben und somit nur wenig zur Verbesserung der Biegesteifigkeit beitragen. Zweitens tritt bei der Herstellung der Höcker eine hohe Plastifizierung des Blechwerkstoffs auf, weil dabei eine erhebliche Vergrößerung der Ausgangsfläche stattfindet und somit eine örtliche Ausdünnung der Blechdicke auftritt. Dieser Ausdünnung des Blechwerkstoffs könnte man dadurch entgehen, wenn das Blech beim Umformen gerafft wird bzw. überall nachfließen kann. Letzteres ist aber nicht möglich, wenn der Blechwerkstoff durch den Eingriff von herkömmlichen Formwerkzeugen quasi festhalten wird.

Es sind ferner noppenartig geprägte Blechbahnen bekannt, die insbesondere als Wärmeabschirmbleche in Automobilen zur Anwendung kommen. Unbefriedigend ist hierbei, dass bei ihrer Herstellung in der Regel geometrisch vorgegebene Formwerkzeuge, wie eine noppenförmige Prägewalze, zum Einsatz kommen. Hierbei wird der Blechwerkstoff durch den flächigen, mechanischen Kontakt mit den Formwerkzeugen stark plastifiziert, ferner wird die Oberflächengüte des Ausgangsbleches erheblich in Mitleidenschaft gezogen, und schließlich ist der erzielte Steifigkeitsgewinn gegenüber dem glatten Blech noch nicht befriedigend.

Es sind beul- bzw. wölbstrukturierte Materialbahnen bekannt. Diese können viereckige (EP 0 693 008), vorzugsweise sechseckige (EP 0 900 131) oder wappenförmige (EP 0 888 208) Strukturen besitzen, die aus Falten (mit engen Radien) und Mulden zusammengesetzt sind. Diese strukturierten Materialbahnen entstehen insbesondere auf der Basis einer kontrollierten Selbstorganisation. Deshalb wird der Bahnwerkstoff bei ihrem Strukturierungsprozess zwar erheblich weniger plastifiziert als bei den oben genannten, mittels mechanischer Formwerkzeuge arbeitenden Strukturierungsprozessen.

Aber dennoch sind diese bekannten beul- bzw. wölbstrukturierten Materialbahnen insbesondere wegen zweier Effekte noch verbesserungsbedürftig: erstens wegen einer werkstofflichen Inhomogenität und zweitens wegen einer geometrischen bzw. prozessbedingten Inhomogenität. Diese zwei nachteiligen Effekte werden im Folgenden etwas näher erläutert: Erster Effekt (Werkstoff): Der Werkstoff der Materialbahn wird beim Strukturieren im Bereich der Falten (charakterisiert durch enge Radien der Falten) drastisch mehr plastifiziert als im Bereich der Mulden. Somit bleiben die großen Pastifizierungsreserven des Werkstoffes im Bereich der Mulden noch ungenutzt, wenn ein primäres Ziel darin besteht, eine große Formsteifigkeit zu erreichen.

Es erscheint zunächst naheliegend, die Plastifizierungsreserven im Bereich der Mulden dafür zu verwenden, dass mittels herkömmlicher mechanischer Formwerkzeuge tiefere Strukturen quasi ausgeprägt werden, um die Formsteifigkeit, insbesondere Biegesteifigkeit, weiter zu steigern. Das ist jedoch nicht ohne Weiteres möglich, weil dabei durch Zugkräfte (wie beim Streckziehen) der Bahnwerkstoff auch im Bereich der Falten erheblich gedehnt und somit die Wanddicke im Bereich der Falten reduziert würde und ferner beispielhaft bei einer hexagonalen Anordnung der Falten aufgrund ihrer engen Radien störende Nebenfalten oder zumindest geometrische Verwerfungen beim Übergang von den eckig zulaufenden Falten zu den Flanken der eingeschlossenen Mulden entstehen können. Auf diese Weise würde trotz Erhöhung der Strukturtiefen (für ein größeres Flächenträgheitsmoment) ein beträchtlicher Teil des maximal möglichen Steifigkeitsgewinns wieder zunichte gemacht. Zweiter Effekt (Geometrie / Prozess): Die hexagonale Gestalt (mit etwa 60°-Symmetrie) der oben genannten vorzugsweise sechseckigen oder wappenförmigen Strukturen der Materialbahn kann prinzipiell aus geometrischen Gründen keine exakt isotrope Biegesteifigkeit für ein praktisches Bauteil (mit etwa rechteckiger Gestalt, d.h. mit 90° Winkeln des Bauteils) liefern. Das kann man sich dadurch erklären, dass die Falten einer sechseckig strukturierten Materialbahn in ihrer Laufrichtung (entspricht der Fertigungsrichtung beim Beul- bzw. Wölbstrukturieren) einen zick-zackförmigen Verlauf annehmen und ca. die zweifache Anzahl von Falten aufweist wie quer zur ihrer Laufrichtung.

Hinsichtlich dieser quer zur Laufrichtung bereits benachteiligten (wegen ihrer geringeren Anzahl) Falten kommt bisher prozessbedingt noch ein weiterer Nachteil hinzu: Beim sechseckigen Beul- bzw. Wölbstrukturieren werden die zick-zackförmigen Falten (in Laufrichtung der Materialbahn) etwas nach außen gekrümmt gebildet, weil sie sich beim Strukturieren von selbst eng an den Umfang der Stützelementwalze anlegen. Im Gegensatz dazu werden die Falten quer zur Umfangsrichtung der Stützelementwalze (quer zur Laufrichtung der Materialbahn) geradlinig gebildet, weil sie parallel zur Achse der Stützelementwalze gebildet werden. Deshalb sind die zick-zackförmigen Falten entlang des Umfangs der Stützelementwalze etwas länger als die Falten quer zur Laufrichtung der Materialbahn. Wird nun die etwa sechseckig beul- bzw. wölbstrukturierte Materialbahn nach dem eigentlichen Strukturierungsprozess in die ebene Lage gerichtet, werden die vergleichsweise längeren, zick-zackförmigen Falten fast gerade gebogen und dadurch in ihrer lichten Länge weiter gestreckt. Dadurch bauen sich in der strukturierten Materialbahn zu ihren benachbarten, etwas kürzeren Bereichen, wie Mulden und Falten quer zur Laufrichtung, innere Reaktionskräfte auf, wodurch die vergleichsweise längeren, zick-zackförmigen Falten gestaucht und damit weiter nach oben gebogen und somit weiter erhöht werden, wogegen die Falten quer dazu gedehnt / aufgebogen und damit in ihrer Höhe verringert werden.

Es wurden bereits früher Anstrengungen unternommen, um diese Nachteile zu überwinden. Hierzu gehören die folgenden früheren Patentanmeldungen: Bekannt sind Wölbstrukturen, die unmittelbar nach dem eigentlichen Beul- bzw. Wölbstrukturierungsvorgang durch Steigerung des Druckes gegen die Materialbahn und mit Hilfe einer evolventenförmigen Gestalt der Stützelemente eine Nachverstreckung der Beul- bzw. Wölbmulden bewirken (DE 196 11 478, PCT / EP 97 / 01465, EP 0 888 208 B1). Nachteilig bleibt jedoch hierbei, dass eine definierte geometrische Gestalt der Evolvente nicht angegeben werden konnte, insbesondere weil die Reibungskoeffizienten im praktischen Betrieb häufig unbekannt sind. Deshalb konnte mit Hilfe der Evolvente nicht oder nur mit großer Mühe erreicht werden, dass zwischen dem Stützelement und der zu strukturierenden Materialbahn eine definierte, große Reibung realisiert wird, um die wirksamen Zugkräfte im Bereich der Falte bei der Nachverstreckung zu reduzieren.

Nachteilig bleibt ferner, dass die großen Reibkräfte im Falle einer dreidimensional wellenförmigen Strukturierung, bei der entweder eine Elastomerschicht zwischen der Materialbahn und dem Stützelement oder angepasste, gerundete Konturen der Stützelemente (DE 10 2005 041 516 B4) zum Einsatz kommen, mit Hilfe einer evolventenförmigen Flanke der Stützelemente sich praktisch nicht aufbauen ließen.

Alle diese Nachteile haben dazu geführt, dass sich das in der (EP 0 888 208 B1 vorgeschlagene Verfahren zur Erzeugung tiefer Strukturen in der Praxis nicht durchsetzen konnte. Bekannt ist ferner ein Verfahren zur Beulverformung dünner Wände und Folien (DE 43 11 978 C1), wobei die Tiefe der Beulen beim elastischen Beulen quasi selbstständig eingestellt wird und im Wesentlichen durch die Größe der Beulen und durch den Krümmungsradius der aufgewickelten Spirale bestimmt wird (DE 43 11 978 C1). Nachteilig bleibt hierbei, dass man aus geometrischen Gründen zur Erzeugung einer tiefen Beulmulde eine sehr große Beulfläche (gekennzeichnet z.B. durch eine vier- oder sechseckige Beulfläche in der Materialbahn) wählen müsste. Das ist aus konstruktiven oder optischen Gründen bei späteren praktischen Anwendungen der beulstrukturierten Materialbahn in Fertigbauteilen häufig nicht erwünscht. Ferner bleibt der Vorschlag in der DE 196 11 478, die Tiefe der Beulen dadurch weiter zu vergrößern, dass für eine plastische, tiefere Ausbildung der Beulen die Verformungstemperatur (während des Beulprozesses) angehoben wird, in der Praxis insbesondere wegen der hohen Prozessenergiekosten sowie wegen der begrenzten Temperaturbeständigkeit der elastomeren Schicht der Druckwalze oder des Druckkissens (für die Erzeugung des Verformungsdruckes für den Beulprozess) unbefriedigend.

Schließlich wurde ein umlaufendes, profiliertes Band aus vorzugsweise faserverstärktem Material vorgeschlagen, welches gegen eine zu strukturierende Materialbahn drückt (DE 43 11 978 C1). Nachteilig bleibt hierbei, dass mit Hilfe des umlaufenden, profilierten Bandes lediglich der für den Beulvorgang notwendige Verformungsdruck aufgebracht werden kann. In der DE 43 11 978 C1 finden sich aber noch keine Hinweise auf eine Herstellung von mehrdimensional strukturierten Materialbahnen, die besser isotrop und zugleich hoch versteift sind. Bekannt ist ferner ein Verfahren zur Herstellung einer wabenförmig strukturierten, energieabsorbierenden Verstärkungs- und Knautschschale für schalenförmige Karosserieteile zum Schutz von Fußgängern (DE 10 2004 044 550 B4), wobei eine gekrümmte Materialbahn durch örtlichen Verformungsdruck nur in ihrem mittleren Bereich beulstrukturiert wird, dabei zunächst in eine stark konkav gekrümmte Gestalt übergeht, dann in eine schwach konkav gekrümmte Gestalt gerichtet wird und dann durch Andrücken von Rollen in eine schwach konvex gekrümmte Gestalt und zugleich formstabile Gestalt umklappt, ohne dass dabei die Strukturfalten und / oder -mulden einknicken. Hierbei kann "eine Materialbahn aus ihrer ebenen Gestalt heraus durch zwei mechanische Formwerkzeuge (Stempel und Matrize) und / oder durch ein mechanisches Werkzeug und ein hydraulisches oder pneumatisches oder elastisches Wirkmedium in eine komplette Verstärkungsschale mit Sattel oder ohne Sattel umgeformt werden (DE 10 2004 044 550 B4). Jedoch "ergibt sich für die strukturierte, dünne Materialbahn ein reduziertes Ergebnis hinsichtlich erzeugter Strukturtiefe und umgesetzter Plastifizierung des Werkstoffes".

Nachteilig sind hierbei insbesondere drei Aspekte: Erstens ist der Umklappvorgang kompliziert und in der Praxis zu sehr schwer zu realisieren, weil er dynamisch und global erfolgen muss, um ein Einknicken der Falten bzw. Mulden zu verhindern. Zweitens wird ein aufwändiger, mehrstufiger Prozessablauf benötigt. Drittens reichen die bisher erzielbaren Beul- bzw. Wölbstrukturtiefen (etwa 4mm) noch nicht aus, um bei einer üblichen Motorhaube, die in der Regel nur wenig gekrümmt ist (Größenordnung der globalen Motorhaubenwölbung: etwa 20mm Höhe bei etwa 1000mm Breite bzw. Länge) im Falle eines Kopfaufschlages eines Fußgängers insbesondere einen globalen Durchschlag der Motorhaube auszuschließen. Dadurch kann die Abbremscharakteristik beim Aufprall sehr ungleichmäßig werden, wodurch der gesetzlich vorgegebene HIC < 1000 Wert nicht zu erreichen ist. Es folgt ein Hinweis zur Verdeutlichung: Die bekannten Beul- bzw. Wölbstrukturen weisen für Karosserieanwendungen, wie die Rückwand des SLK von Daimler eine anisotrope Strukturtiefe von 3,6 mm (quer zur Zick-zack-Struktur) bzw. 2,0 mm (längs dazu) auf, während einige bekannte tief-streckgezogene Näpfe für die Verstärkungsschale einer Motorhaube für den Fußgängerschutz eine Napftiefe von etwa 18 bis 22 mm besitzen.

Ferner ist eine Motorhaube mit Fußgängerschutz bekannt, wobei die Innenschale im Bereich der Kopfaufprallzone mit einem wölbstrukturierten Versteifungsblech (DE 102 59 591 A1) versehen ist. Dabei wird die Fläche der Materialbahn durch das Wölbstrukturieren nicht oder nur unwesentlich vergrößert (EP 000001572504 B1 oder der US 2006 / 0220418 A1). Nachteilig ist hierbei, dass die Mulden der Wölbstrukturen auf der konvexen Seite der Verstärkungsschale der Motorhaube angeordnet sind, aber noch unklar ist, wie diese wölbstrukturierte Schale mit auf der Außenseite angeordneten Mulden überhaupt gefertigt werden kann. Das bekannte Wölbstrukturieren, einschließlich das kontinuierliche Wölbstrukturieren und Richten, erlaubt keine Anordnung von Mulden auf der Außenseite einer wölbstrukturierten Materialbahn. Das lässt sich folgendermaßen begründen: Beim Wölbstrukturieren finden örtliche, dynamische Durchschläge einer konvex gekrümmten Materialbahn statt, wobei die Falten und von den Falten eingeschlossenen Mulden gebildet werden und sich deshalb die gebildeten Mulden auf der Innenseite der gekrümmten Materialbahn anordnen. Beim anschließenden Biegen der wölbstrukturierten Materialbahn in die Gegenkrümmung (mit dem Ziel, die Mulden auf der Außenseite anzuordnen) können die Falten instabil werden und leicht einknicken. Dadurch werden die Mulden so verzerrt, dass die Mulden einknicken oder zumindest ihre Formsteifigkeit stark einbüßen können. Eigene Untersuchungen haben das gezeigt.

Ferner ist eine strukturierte Innenschale für eine Motorhaube mit Fußgängerschutz bekannt (WO 02 / 47961 A1). Nachteilig ist hierbei, dass die Strukturen mit Hilfe einer Streck-Ziehumformung hergestellt werden müssen (erkennbar aus den glatten, d.h. nicht strukturierten Rändern der Innenschale), wobei der Werkstoff der Materialbahn erheblich plastifiziert wird. Es wäre wünschenswert, große Plastifizierungsreserven für den Crashfall und für die Dauerschwingfestigkeit (Wöhler-Kurve), insbesondere auch für hochfeste Werkstoffe der Materialbahn, wie mit nur geringen Dehngrenzen, vorzuhalten.

Bekannt ist ferner ein Bauteil aus einem Flachmaterial und ein Verfahren zu seiner Herstellung gemäß DE 10 2006 055 657 A1, WO 2008 / 062263 A1. Hierbei wird "das Flachmaterial mit einer Verformungsstruktur versehen, die sich nach Art einer Pressung teilweise senkrecht zur Mittelfläche erstreckt. Dabei erfolgt die Druckaufbringung vorzugsweise hauptsächlich über elastomere Wirkmedien, wobei zur Strukturierung ein beispielsweise aus modularen Einzelelementen aufgebautes Werkzeug zum Einsatz kommt" (WO 2008 / 062263 A1). Nachteilig sind hierbei zwei Effekte: Erstens wird das Flachmaterial durch ein ebenes oder nur schwach gekrümmtes und mit den Negativ-Konturen der herzustellenden Struktur ausgestattetes Formwerkzeug großflächig gegen das zu strukturierende Flachmaterial gedrückt, wodurch das Flachmaterial großflächig fixiert und somit quasi eingesperrt wird. Dadurch tritt beim Strukturieren im Wesentlichen ein Streckvorgang auf, wobei eine erhebliche Vergrößerung der Ausgangsfläche des Flachmaterials und somit insbesondere auch im Bereich der gebildeten Falten der Werkstoff erheblich plastifiziert und die Wanddicke reduziert werden. Zweitens können bei dem in WO 2008 / 062263 A1 beschriebenen Pressprozess nicht die Vorteile einer energie- und materialschonenden Strukturierung, die auf Basis einer kontrollierten Selbstorganisation gefunden wurde, zur Geltung kommen; denn die geometrischen Größen für die Krümmung des Werkzeuges, die Stützabstände der Stützelemente (WO 2008 / 062263 A1) und die Dicke des Flachmaterials entsprechen nicht den Parametern, die eine Beul- bzw. Wölbstrukturierung, vorzugsweise auf der Basis einer kontrollierten Selbstorganisation, ermöglichen.

Ferner sind dreidimensional wellenförmige Strukturen (DE 10 2005 041 516 B4) bekannt, wobei eine hexagonale Struktur jeweils aus sechs gerundeten Teilflächen, so genannten Wülsten, und einer von diesen sechs Wülsten eingeschlossenen Kalotte zusammengesetzt ist. Die Wülste besitzen im Gegensatz zu den oben genannten Falten (mit engem Radius der Beul- bzw. Wölbstrukturen) eine deutlich sanftere und somit werkstoffschonendere Rundung und weisen eine entgegengesetzte Krümmung wie die der Kalotten auf. Deshalb werden diese Strukturen auch dreidimensional wellenförmige Strukturen genannt. Diese dreidimensional wellenförmigen Strukturen können ebenfalls selbstbildend entstehen, wobei eine Materialbahn durch eine Druckbeaufschlagung auf eine ihrer Seiten über eine elastische Zwischenlage gegen die auf der anderen Seite der Materialbahn angeordneten Stützelemente gedrückt wird und wobei das Stützelement und die an die Kontur dieses Stützelementes angedrückte elastische Zwischenlage die Bildung der Wülste und Kalotten erzeugt (vgl. DE 10 2005 041 516 B4). Es können auch starre Stützelemente auf einem Kern oder in einem Werkzeug verwendet werden, deren Kontur dem Wulst der dreidimensional wellenförmig strukturierten Materialbahn angepasst ist (DE 10 2005 041 516 B4).

Die dreidimensional wellenförmig strukturierte Materialbahn weist aber noch Nachteile auf: Beispielsweise reicht im Falle der strukturierten Verstärkungsschale für eine Motorhaube für den Fußgängerschutz die maximal erzielbare Strukturhöhe der Wülste und der Kalotten, beispielsweise von etwa 4 bis 5 mm bei einem Hexagon mit der Strukturweite (Schlüsselweite SW), häufig noch nicht aus, um den körperverträglichen HIC < 1000 Wert sicher zu erreichen. Es sei noch einmal daran erinnert, dass die konventionellen Näpfe der bekannten Verstärkungsschalen für den Fußgängerschutz die Strukturhöhe von etwa 18 bis 22 mm erfordern. Ferner wären größere Strukturhöhen für eine höhere Versteifung (wie für größeres Flächenträgheitsmoment) im Zusammenhang mit einzelnen versteiften Wänden oder Verbundkonstruktionen, wie Sandwichs, wünschenswert.

Bekannt ist ferner ein Verfahren zur Herstellung eines strukturierten Kunststoffbauteils (DE 10 2006 014 049 B4), insbesondere ein Verfahren zur Selbststrukturierung eines schichtförmigen Materials (Strukturierungsschicht) und ein mit diesem Verfahren hergestelltes Kunststoffbauteil. Dabei wird eine Strukturierungsschicht, die aus einem Verstärkungsmaterial, wie Fasern verschiedenster Art, und einem vernetzbaren Bindemittel, auch Prepreg genannt, einer Formung unterzogen, durch die eine selbststrukturierende Wölbstrukturierung gebildet wird. Dabei kann sich das Verstärkungsmittel, das typischerweise Fasermaterial umfasst, im Verbund mit dem Bindemittel in mikroskopischen Dimensionen umformen und verschränken, so dass die mechanischen Eigenschaften des fertigen Kunststoffbauteils verbessert werden. Alternativ können Stützelemente als Formwerkzeuge verwendet werden, und hierzu eine Geometrie entsprechend einer durch Selbstorganisation gebildeten Wölbstruktur aufweisen, so dass die Wölbstrukturierung durch die Druckbeaufschlagung mittels Formung der Strukturierungsschicht durch die Stützelemente erfolgt. Gemäß einer weiteren Variante bilden die Stützelemente ein Werkzeug mit einer starren geometrischen Werkzeugoberfläche, die so gebildet ist, dass sie der Oberflächengestalt der selbststrukturierten Strukturierungsschicht entspricht. Dieses in der DE 10 2006 014 049 B4 genannte Verfahren ist noch verbesserungsbedürftig, wenn das Ziel darin besteht, die Steifigkeit, insbesondere eine näherungsweise isotrope Biegesteifigkeit, einer faserverstärkten, insbesondere einer / eines mit Kohle- oder Glasfasern verstärkten Kunststoffbahn bzw. Kunststoffbauteils deutlich zu erhöhen. Das würde nur mit Hilfe von tieferen Strukturen gelingen. Das bekannte Verfahren zur Selbststrukturierung erlaubt das jedoch noch nicht, weil bei einer größeren Druckbeaufschlagung die Fasern reißen würden.

Das Dokument US 2,441,476 A beschreibt ein Verfahren zur Herstellung einer verstärkten Materialbahn.

Das Dokument FR 1 089 219 A betrifft ein Verfahren zum Verformen einer flachen Materialbahn.

Das Dokument DE 19651937 A1 offenbart ein Verfahren nach dem Oberbegriff des Anspruchs 1.

### Zusammenfassung der Erfindung

Aufgabe der Erfindung ist es, verbesserte Technologien zum mehrdimensional Strukturieren einer flachen Materialbahn anzugeben, die das Ausbilden verbesserter Strukturen ermöglichen, insbesondere soll die Strukturtiefe optimiert werden.

Diese Aufgabe wird erfindungsgemäß durch ein Verfahren zum mehrdimensional Strukturieren einer flachen Materialbahn nach dem unabhängigen Anspruch 1 gelöst.

Vorteilhafte Ausgestaltungen der Erfindung sind Gegenstand von abhängigen Unteransprüchen.

Eine vorteilhafte Ausführungsform der Erfindung sieht vor, dass die ersten und die zweiten Strukturelemente der Selbstorganisation entsprechend gebildet werden.

Eine zweckmäßige Fortbildung der Erfindung kann vorsehen, dass als Druckelementeträger eine Druckelementewalze und als zugeordneter Stützelementeträger eine Stützelementewalze verwendet werden. Alternativ können für den Druckelementeträger und den zugeordneten Stützelementeträger Formwerkzeuge verwendet werden.

Bei einer vorteilhaften Ausgestaltung der Erfindung ist vorgesehen, dass sich die Materialbahn beim Durchschlagen nur an Teile der mittels der Stützelemente gebildeten Muldenstruktur anlegt, die im Wesentlichen in Laufrichtung gebildet sind.

Eine zweckmäßige Fortbildung der Erfindung sieht vor, dass die zweiten Strukturelemente der Materialbahn einer drei-, vier-, sechs- oder achteckigen Form entsprechend gebildet werden

Bei einer Weiterbildung der Erfindung kann vorgesehen sein, dass die Materialbahn in seitlichen Randbereichen in größerem Umfang quer zur Laufrichtung gerafft wird als im mittleren Bereich der Materialbahn.

Eine Ausgestaltung der Erfindung sieht vor, dass die Materialbahn mit gleicher Biegesteifigkeit in und quer zur Laufrichtung gebildet wird, indem die ersten und die zweiten Strukturelemente mit im Wesentlichen gleicher isotroper Tiefe gebildet werden und die ersten Strukturelemente bei dem weiteren Strukturieren in Laufrichtung gerafft werden. Dieses kann beispielsweise dadurch ausgeführt, dass zwischen den Stützelementen und den Druckelementen eine elastische Schicht angeordnet wird.

Eine Ausführungsform der Erfindung sieht vor, dass die Materialbahn beim Strukturieren mit einer oder mehreren Profilkanten versehen wird.

Eine zweckmäßige Fortbildung der Erfindung sieht vor, dass die Materialbahn als ein Verbund mit Schicht aus einem faserverstärkten Kunststoff im formbaren Zustand zugeführt wird, die zwischen einer oberen und einer unteren Metallschicht angeordnet ist.

Bei einer Weiterbildung der Erfindung kann vorgesehen sein, dass die obere und die untere Metallschicht einer der folgenden Ausführungen entsprechend verwendet werden: primär strukturierte Metallschichten und glatte Metallschichten.

Bei einer vorteilhaften Ausgestaltung der Erfindung ist vorgesehen, dass nach dem weiteren Strukturieren die zweiten Strukturelemente quer zur Laufrichtung tief geprägt werden. Dieses wird vorzugsweise mittels einer glatten Druckschicht und unter wahlweiser Nutzung der Stützelemente ausgeführt.

Zu den mit der Erfindung überwundenen Probleme gehören insbesondere, dass
- die Materialbahn vergleichsweise deutlich tiefere Mulden oder Kalotten, als die der bekannten Beul- bzw. Wölbstrukturen oder der dreidimensional wellenförmigen Strukturen, und zugleich Falten oder Wülste erhält, die eine eher isotrope - d.h. in mehreren Richtungen gleichmäßigere - Versteifung bewirken,
- trotz der insbesondere tiefen Mulden oder Kalotten, eine Reduzierung der Wanddicke der Materialbahn im Bereich der Falten oder Wülste vermieden wird,
- die Mulden oder Kalotten auch auf der Außenseite einer gekrümmten, strukturierten Materialbahn oder Schale angeordnet werden können und
- bei der Anwendung von dünnen Materialbahnen aus hoch- und höchstfesten Werkstoffen, wie mit sehr geringen Dehngrenzen, mehrdimensional versteifende Strukturen vorzugsweise in einem einstufigen Strukturierungsprozess erzeugt und in eine ebene oder zumindest nahezu ebene Lage gebracht werden können.

Nachfolgend werden Aspekte und bevorzugte Ausgestaltungen der Erfindung weiter im Detail erläutert, insbesondere auch betreffend die vorangehend erläuterten Ausführungsformen.

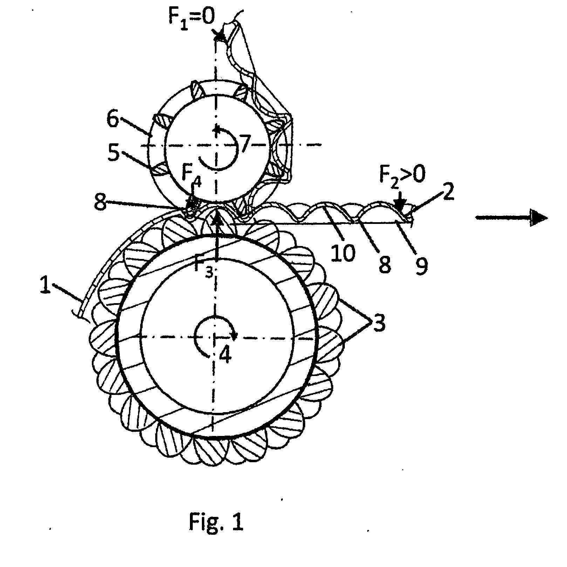

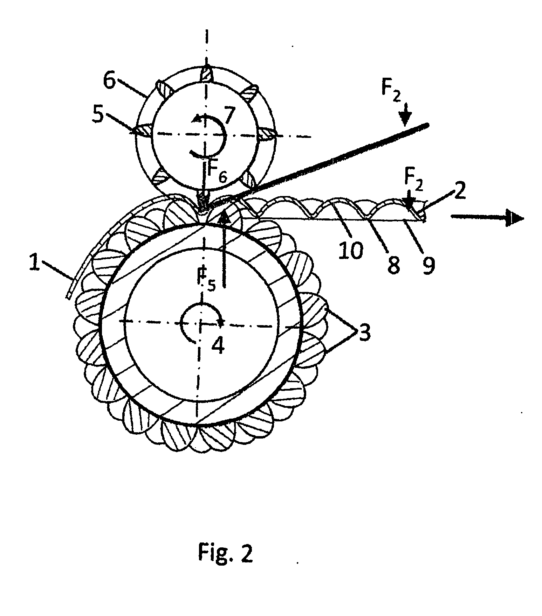

Die Erfindung sieht in einer bevorzugten Ausgestaltung insbesondere die folgenden vier Merkmale vor, wobei die Merkmale synergetisch miteinander verknüpft sind. Merkmal 1: Eine im Wesentlichen biegende Umformung der / des Materialbahn / Profils im Bereich der in Laufrichtung zu bildenden Wülste bzw. Falten durch ein örtliches Umklappen (Durchschlagen) beim partiellen Andrücken der / des Materialbahn / Profils gegen gekrümmte Stützelemente. Merkmal 2: Raffen der / des Materialbahn / Profils in Laufrichtung während des Strukturierens durch im Wesentlichen erzwungenes Wegbiegen der / des Materialbahn / Profils weg von den gekrümmten Stützelementen. Durch dieses Wegbiegen wird eine Hebelwirkung aufgebaut, die später in Fig. 1 und Fig. 2 anschaulich dargestellt wird. Merkmal 3: Ausbilden der Wülste oder Falten quer zur Laufrichtung der / des Materialbahn / Profils durch sequenzielles Andrücken der Stützelemente, die quer zur Laufrichtung der / des Materialbahn / Profils angeordnet sind, gegen die Materialbahn. Das erfolgt im Wesentlichen durch die beim Wegbiegen (Merkmal 2) erzeugte Hebelwirkung. Der Effekt des sequenzielles Andrückens der Stützelemente kann insbesondere im Fall von hexagonal gebildeten Strukturen durch eine sich von selbst einstellende Wellenbildung in der Materialbahn noch verstärkt werden. Der zuletzt genannte Effekt steht im engen Zusammenhang mit den gerundeten Druckelementen des folgenden Merkmals 4. Merkmal 4: Ein vorzugsweise tiefes Ausbilden der Kalotten oder Mulden durch gerundete, vorzugsweise selbst angepasste Druckelemente.

Alle vier Merkmale kommen eng miteinander verknüpft insbesondere dann zum Tragen, wenn die Kalotten oder Mulden noch nicht sehr tief ausgeformt werden sollen. Das gilt insbesondere entweder für hochfeste Werkstoffe oder für duktile Werkstoffe, deren Plastifizierungsreserven noch für sekundäre Umformprozesse, wie für den späteren Crashfall, vorzuhalten sind. Alle diese Merkmale und ihr komplexes Zusammenwirken werden im Folgenden noch näher beschrieben und begründet. Hierbei erweisen sich die Wülste und die Kalotten, die analog dem dreidimensional wellenförmigen Strukturieren (gebildet mit elastischer Zwischenlage) mit ihren sanfteren Rundungen ihrer Konturen günstiger als die Falten und Mulden, die analog dem Beul- bzw. Wölbstrukturieren (d.h. ohne elastische Zwischenlage) entstehen. Das günstigere Verhalten der Wülste und Kalotten äußert sich im Wesentlichen in der geringeren Plastifizierung aufgrund der sanfteren Rundungen ihrer Konturen. Zum einfacheren Verständnis wird zuerst das Verfahren zum Strukturieren einer Materialbahn gemäß der Erfindung näher beschrieben, um die vier Merkmale deutlicher hervorzuheben und zu begründen und gegenüber den bekannten Verfahren, wie dem bekannten dreidimensional wellenförmigen Strukturieren und dem bekannten Beul- bzw. Wölbstrukturieren (charakterisiert durch elastisch-plastisches Werkstoffverhalten beim Strukturieren) und gegenüber den konventionellen Prägetechniken (beispielsweise für Noppen- und Höcker-Bleche, charakterisiert durch ausschließlich plastisches Werkstoffverhalten beim Strukturieren) klar abzugrenzen. Es folgt dann später die Beschreibung für das Strukturieren eines Profils.

Die Verknüpfung der Merkmale 1 und 2 wird nach der Erfindung dadurch erreicht, dass eine biegende Umformung der Materialbahn durch ein partielles Umklappen, d.h. Umformen von der einen Krümmung in die Gegenkrümmung der Materialbahn, erfolgt. Hierbei kommen während des Umklappens im Wesentlichen nur die gekrümmten Stützelemente in Laufrichtung der Materialbahn, im Falle einer hexagonalen Strukturbildung die zick-zackförmigen, gekrümmten Stützelemente, zum Eingriff.

Im Gegensatz zum bekannten dreidimensional wellenförmigen Strukturieren und zum bekannten Beul- bzw. Wölbstrukturieren wird nach der Erfindung die Materialbahn in Laufrichtung von den gebogenen Stützelementen weggebogen, sodass nicht sämtliche, jeweils eine einzelne Struktur erzeugende, Stützelemente gleichzeitig im Eingriff sind. Dennoch wird nach der Erfindung die Bildung der Wülste oder Falten quer zur Laufrichtung der Materialbahn wesentlich durch das Wegbiegen der Materialbahn, das eine vorzugsweise starke Hebelwirkung hervorruft, erzeugt. Hierdurch wird also erreicht, dass einerseits eine materialschonend biegende Umformung mit vergleichsweise großem Verformungsweg (beim Durchschlag) senkrecht zur Richtung der Materialbahn (für ein hohes Flächenträgheitsmoment) erfolgt, und andererseits ein quasi freies Raffen in Laufrichtung der Materialbahn beim Strukturieren ermöglicht wird. Bedeutsam ist in einer Ausführung, dass zugleich auch gut ausgeformte Wülste oder Falten quer zur Laufrichtung der Materialbahn gebildet werden, wie später noch begründet wird.

Das Strukturierungsverfahren unterscheidet sich von den bekannten Strukturierungsverfahren, wie dem Beul- bzw. Wölbstrukturieren oder dem dreidimensional wellenförmigen Strukturieren wesentlich, wie folgt: Bei bekannten Verfahren wird die Materialbahn durch den gleichzeitigen Eingriff sämtlicher Stützelemente (d.h. sowohl in als auch quer zur Laufrichtung), die für die Bildung jeweils einer einzigen Struktur, bestehend aus Wülsten und der von den Wülsten eingeschlossenen Kalotte oder bestehend aus Falten und der von den Falten eingeschlossenen Mulde, erforderlich sind, maßgeblich beim Raffen in ihrer Laufrichtung behindert. Beim vorgeschlagenen Verfahren ist ein vergleichsweise stärkeres Raffen in Laufrichtung der Materialbahn möglich, da die Stützelemente nicht gleichzeitig sondern sequenziell im Eingriff sind.

Ergänzende Simulationsberechnungen haben ergeben, dass sich das Umklappen von den oben genannten, bekannten Verfahren deutlich unterscheidet hinsichtlich der sich ausbildenden Strukturgeometrie und der resultierenden örtlichen Dehnungen. Das neue Verfahren lässt sich anschaulich etwa wie ein "offenes" Umklappen / Durchschlagen (temporärer Zustand gemäß Fig. 1 unten) charakterisieren, wobei im Wesentlichen die gebogenen Stützelemente in Laufrichtung der Materialbahn (vgl. unten Bezugszeichen 6 in Fig. 1, Fig. 7, Fig. 8) zum Eingriff kommen und dadurch die Materialbahn nach dem Durchschlag partiell dreidimensional auswölben.

Experimentelle Dehnungsanalysen an einem strukturierten Blech weisen eine klare Abgrenzung sowohl gegenüber den bekannten Beul- bzw. Wölbstrukturierungsverfahren oder dreidimensional wellenförmigen Strukturieren einerseits als auch den konventionellen Prägetechniken (beispielsweise für Noppen- und Höcker-Bleche) auf: Die Dehnungsanalysen ergaben, dass die Materialdicke im Bereich der Wülste oder Falten etwa gleich geblieben ist oder sogar noch zugenommen hat und nur im Bereich der Kalotten oder Mulden etwas reduziert wird. Das lässt sich folgendermaßen erklären: Beim offenen Durchschlag entstehen Membran-Druckkräfte, wodurch etwas Material in die Wülste oder Falten quasi hineingedrückt wird. (Hinweis: Beim konventionellen Prägen ist das nicht der Fall). Beim Eingriff der Druckelemente treten Zugkräfte auf, die zwar eine moderate Reduzierung der Wanddicke im Bereich der tief ausgeformten Kalotten oder Mulden hervorrufen, aber zu keiner Reduzierung der ursprünglichen (noch nicht strukturierten) Materialdicke im Bereich der Wülste oder Falten führen.

Bei der Verknüpfung der Merkmale 2 und 3 der oben genannten bevorzugten Ausführungsform spielt das Wegbiegen der Materialbahn weg von den gekrümmten Stützelementen und die dabei aufgebaute Hebelwirkung in zweierlei Weise eine wichtige Rolle, wie nachfolgend erläutert wird.

Erster Effekt: Man hätte zunächst erwarten können, dass durch das Wegbiegen der Materialbahn weg von den gekrümmten Stützelementen (in Laufrichtung) die Stützelemente quer zur Laufrichtung der Materialbahn im Vergleich zu den oben genannten, bekannten Verfahren weniger zum Eingriff kommen (weil die Materialbahn in Laufrichtung weggebogen wird) und deshalb die Wülste oder Falten quer zur Laufrichtung der Materialbahn vermindert ausgebildet werden. Das ist jedoch nicht der Fall. Trotz des Wegbiegens der Materialbahn werden die Wülste oder Falten quer zur Laufrichtung der Materialbahn sogar besser ausgebildet als ohne das Wegbiegen der strukturierten Materialbahn weg von den gekrümmten Stützelementen. Das wurde durch experimentelle und vergleichende Untersuchungen bestätigt. Das lässt sich durch die vorzugsweise stark aufgebaute Hebelwirkung erklären, wodurch die Materialbahn sequenziell (d.h. schon bereits beim Eintritt in die Strukturierungseinheit, und dann auch beim Austritt) gegen die Stützelemente quer zur Laufrichtung zusätzlich etwas angedrückt und dadurch vorgeformt wird.

Eine starke Hebelwirkung wird insbesondere dann erzielt, wenn die Wülste oder Falten in Richtung der Materialbahn eine besonders hohe Biegesteifigkeit in Laufrichtung der Materialbahn aufweisen. Das wird insbesondere dadurch erreicht, dass die Anordnung und Kontur der Stützelemente nach den Gesetzmäßigkeiten der Selbstorganisation gebildet werden. Denn hierbei ergeben sich besonders werkstoffschonend die vergleichsweise höchsten Biegesteifigkeiten in Laufrichtung der Materialbahn, wodurch beim Wegbiegen der Materialbahn (weg von den gekrümmten Stützelementen) eine besonders hohe Hebelkraft gebildet wird.

Eine starke Hebelwirkung wird in einer Ausgestaltung sogar dann erreicht, wenn zwischen den Stützelementen und der Materialbahn zusätzlich eine elastische Zwischenschicht zwischen den Stützelementen und der Materialbahn geführt wird. Das war zunächst nicht zu erwarten gewesen, da beim bekannten dreidimensional wellenförmigen Strukturieren (mit Stützelementwalze, elastischer Zwischenschicht und Druckwalze mit glatter Elastomerschicht, beschrieben in DE 10 2005 041 516 B4) die strukturierte Materialbahn nur wenig gekrümmt die Strukturierungseinheit verlässt. Dadurch wäre nur eine sehr kleine Hebelwirkung realisierbar. Überraschenderweise verlässt die strukturierte Materialbahn nach einer Variante des Verfahrens, bei der eine zusätzliche elastische Zwischenschicht zwischen den Stützelementen und der Materialbahn geführt wird und von der Gegenseite der Materialbahn gerundete Druckelemente einwirken, stark um die Stützelemente gekrümmt die Strukturierungseinheit. Dadurch kann eine starke Hebelkraft durch das Wegbiegen weg von der Stützelementwalze erzeugt werden, wie eigene experimentelle Untersuchungen gezeigt haben. Zweiter Effekt: Der zweite vorteilhafte Effekt der aufgebauten Hebelwirkung kann erst später im Zusammenhang mit der Wirkungsweise der gerundeten Druckelemente (aus Merkmal 4) erläutert werden.

Zu Merkmal 4: Beim vorzugsweise tiefen Ausbilden der Kalotten oder Mulden spielen nach der Erfindung konvex gerundete, vorzugsweise sich selbst anpassende Druckelemente eine besondere Rolle. Die Wirkungsweise der gerundeten Druckelemente ist komplex und steht in einem engen Zusammenhang zum gesamten Strukturierungsverfahren, d.h. auch zu den Merkmalen 1 bis 3. Da deshalb diese Druckelemente nicht gesondert betrachtet werden können, wird im Folgenden beispielhaft ein gesamter Strukturierungsprozess kurz beschrieben und erläutert. Später folgen die detaillierteren Ausführungen und Varianten in der Beschreibung bzw. anhand der Figuren.

Beim Herstellen der mehrdimensional, versteifend strukturierten Materialbahn drücken in einer Ausführungsvariante angepasste, gerundete Druckelemente, die vorzugsweise auf einer ersten Walze (nachfolgend kurz Druckelementwalze genannt) angebracht sind, partiell gegen eine Materialbahn, die durch das partielle Andrücken gegen die oben beschriebenen gekrümmten Stützelemente, die auf einer weiteren Walze (nachfolgend kurz Stützelementwalze genannt) angeordnet sind, partiell gemäß der Krümmung der Stützelementwalze ebenfalls gekrümmt wird. Die Stützelemente sind in ihrem Querschnitt vorzugsweise gerundet. Die Stützelemente werden bevorzugt so gestaltet und angeordnet, dass eine hoch versteifende Wirkung der Strukturen bei gleichzeitig weitgehender Schonung des Werkstoffes (geringer Plastifizierung des Werkstoffes) der Materialbahn erzielt wird. Das wird dadurch erreicht, dass bei der Dimensionierung der Stützelemente und ihrer Anordnung auf der Walze vorzugsweise die Gesetzmäßigkeiten der Selbstorganisation, analog dem dreidimensional wellenförmigen Strukturieren oder dem Beul- bzw. Wölbstrukturieren, angewandt werden. Alternativ können auch geometrisch angepasste, starre Stützelemente zur Anwendung kommen, welche die gleiche oder zumindest ähnliche Kontur wie nach der Selbstorganisation besitzen.

Gemäß dem Merkmal 4 der oben genannten Ausführungsform sollen die Kalotten oder Mulden durch angepasste, gerundete Druckelemente vorzugsweise tief ausgeformt werden, wobei die Wanddicke der Materialbahn im Bereich der Kalotten oder Mulden nur moderat reduziert und im Bereich der Wülste oder Falten nicht reduziert oder sogar etwas verstärkt wird. Zum Auffinden der passenden, konvex gerundeten Kontur der Druckelemente wurden zunächst fast beliebig geformte, elastische Druckelemente eingesetzt und deren Konturradien so lange variiert, bis sich beim Strukturieren mittels der Druckelementwalze und der Stützelementwalze, einerseits ein sanfter Übergang von den vorzugsweise tief ausgeformten Kalotten oder Mulden hin zu den Wülsten oder Falten ergibt und andererseits eine hohe Versteifung, insbesondere Biegesteifigkeit, erreicht wird.

Untersuchungen haben gezeigt, dass mit Hilfe von werkstofflichen Untersuchungen (der örtlichen Plastifizierungsgrade und der örtlichen Materialdicken) der strukturierten Materialbahn eine optimale Kontur der gerundeten Druckelemente gefunden werden kann. Auf diese Weise kann erreicht werden, dass der Werkstoff der Materialbahn im Bereich der Kalotten oder Mulden vergleichsweise wenig plastifiziert und somit die Wanddicke dort lediglich nur moderat verringert wird, ein sanft gerundeter Übergang von der Kontur der Kalotten oder Mulden zur Kontur der Wülste oder Falten gebildet wird und tief ausgebildete Kalotten oder Mulden gebildet werden und so eine hohe Versteifung der Materialbahn erzielt wird.

Untersuchungen haben ferner gezeigt, dass in einer Ausführungsform eine moderate Reduzierung der Wanddicke der Materialbahn im Bereich der tief ausgeformten Kalotten oder Mulden einen deutlich geringeren negativen Einfluss auf die Formsteifigkeit, insbesondere Biegesteifigkeit, der mehrdimensional strukturierten Materialbahn ausübt als der überwiegende positive Einfluss der im Wesentlichen gleich bleibenden Wanddicke im Bereich der Wülste oder Falten. Mit anderen Worten: Beim Strukturierungsprozess bleibt die Wanddicke der Materialbahn im Bereich der Wülste oder Falten im Wesentlichen gleich, während eine moderate Reduzierung der Wanddicke im Bereich der tief ausgeformten Wülste oder Mulden ohne störende Steifigkeitseinbußen in Kauf genommen werden kann. Die Wanddicke der Materialbahn im Bereich der Wülste oder Falten bleibt trotz der auftretenden Zugkräfte durch den Eingriff der Druckelemente beim Ausformen der Kalotten oder Mulden deshalb etwa gleich, da beim örtlichen Umklappen von der Ausgangskrümmung in die Gegenkrümmung der Materialbahn kompensierende Membran-Druckkräfte aufgebaut werden.

Insbesondere für den Spezialfall einer hexagonalen Strukturbildung existiert eine weitere Verknüpfung zwischen dem örtlichen Umklappen der Materialbahn, dem Einbringen der quer zur Laufbahn der Materialbahn angeordneten Wülste oder Falten und dem Einwirken der gerundeten Druckelemente. Hierbei kommen in Laufrichtung der Materialbahn zick-zackförmige, gerundete Stützelemente zum Eingriff und erzeugen in Verbindung mit den in Laufrichtung versetzt angeordneten, gerundeten Druckelementen von selbst alternierende Wellenbildungen in der einlaufenden, glatten Materialbahn. Die Wellenberge in der glatten Materialbahn entstehen insbesondere durch den Eingriff der in Laufrichtung der Materialbahn versetzt angeordneten Druckelemente. Diese Wellenberge in der glatten (noch nicht strukturierten) Materialbahn drücken jeweils gegen die quer zur Laufrichtung auf der Stützelementwalze angeordneten Stützelemente. Dadurch werden die Wülste oder Falten quer zur Laufrichtung bereits früh ausgebildet. Diese Zusammenhänge werden später insbesondere anhand der Figuren 1 bis 6 noch etwas näher erläutert.

Nach einer weiteren Ausgestaltung der Erfindung wird die zu strukturierende Materialbahn gerade oder etwas vorgekrümmt in die Strukturierungseinheit, bestehend beispielsweise aus Druckelementwalze und Stützelementwalze, geführt, wobei vorzugsweise die Vorkrümmung der Materialbahn entgegen der Krümmung der in Laufrichtung der Materialbahn angeordneten Stützelemente ausgerichtet ist. Hierdurch erfährt die zu strukturierende Materiabahn, auch in Verbindung mit den versetzt angeordneten Druckelementen, während des gesamten Strukturierungsvorgangs sowohl in ihrer Laufrichtung als auch schräg oder quer dazu sequenzielle, mehrdimensionale Krümmungsänderungen, welche die Intensität des Durchschlagens erheblich verstärken.

Dem Fachmann ist aus der einschlägigen Literatur über biegsame, dünne Schalen bekannt, dass eine mehrdimensional gekrümmte, flache Schale viel steifer ist als eine zweidimensional (zylindrisch) gekrümmte, flache Schale. Ein umfassendes charakteristisches Merkmal des Verfahrens nach der Erfindung besteht also darin, dass einerseits die Materialbahn beim Strukturieren und gleichzeitigen (Vor)-Richten insgesamt geometrisch nur wenig, quasi hinund her, gebogen wird und trotzdem dreidimensionale Strukturen gut gebildet werden können, wobei zugleich der Werkstoff der Materialbahn sehr geschont werden kann. Diese Zusammenhänge sind auch in der weiteren Beschreibung und anhand der Figuren noch besser zu erkennen.

Bei der Verwendung von insbesondere eher duktilen Werkstoffen der Materialbahn lassen sich tief ausgebildete Strukturen, wie Wülste und Kalotten oder Falten und Mulden, erzeugen, wobei tendenziell die Merkmale eines plastischen Umformens der Materialbahn in den Kalotten oder Mulden mehr in den Vordergrund treten. Hierbei spielt die Hebelwirkung eine nicht mehr eine so gravierende Rolle. Dennoch bleiben die Charakteristika einer weitgehend biegenden Umformung erhalten, wobei die Wanddicke im Bereich der Wülste oder Falten durch den Strukturierungsprozess im Wesentlichen nicht verändert wird. Nach der Erfindung kann insbesondere in einer hexagonal, mit vorzugsweise Wülsten, strukturierten Materialbahn sogar eine isotrope, d.h. in und quer zur Laufrichtung der Materialbahn gleiche, Biegesteifigkeit erzielt werden. Das war nicht zu erwarten gewesen. Denn selbst für den Fall, dass bei einer hexagonalen Strukturierung isotrop gleiche Strukturtiefen der Wülste (d.h. gleich tief sowohl in bzw. schräg als auch quer zur Laufrichtung der Materialbahn) erzeugt werden, sollten die Biegesteifigkeiten eigentlich anisotrop sein; denn ein hexagonal (sechseckige Strukturen hat eine 60°-Symmetrie) strukturierter Materialbahnabschnitt (rechteckiger Abschnitt hat eine 90°-Symmetrie) besitzt in seiner Längsrichtung (mit zick-zackförmig angeordneten Wülsten oder Falten) eine größere Anzahl von versteifend wirksamen Wülsten oder Falten als in Querrichtung des Materialbahnabschnittes.

Dennoch kann eine isotrope Biegesteifigkeit von hexagonal strukturierten Materialbahnen erzeugt werden, wenn eine Materialbahn mit Hilfe einer zusätzlichen elastischen Zwischenschicht zwischen den Stützelementen und der Materialbahn strukturiert wird, wobei die gebildeten, zick-zackförmigen Wülste sich von selbst in ihrer Längsrichtung etwas raffen (sichtbar als kleine, sanfte Nebenfalten quer zur Kontur der Wülste), während die Wülste quer zur Laufrichtung der Materialbahn gerade gebildet werden. Auf diese Weise wird die Wirkung der größeren Anzahl der versteifend wirksamen Wülste in Laufrichtung - gegenüber der geringeren Anzahl der versteifend wirksamen Wülste quer zur Laufrichtung der Materialbahn - durch den Kompensationseffekt der gerafften Wülste in etwa ausgeglichen.

Die Raffung der Wülste, insbesondere die zick-zackförmigen Wülste in Richtung der Materialbahn, bringt noch einen weiteren Vorteil mit sich: In der DE 10 2005 041 516 B4 wurde bereits darauf hingewiesen, dass beim Rückbiegen der strukturierten Materialbahn (für das Richten in die ebene Gestalt) die in Umlaufrichtung der Stützelementwalze erzeugten zick-zackförmigen Falten oder Wülste gestaucht (durch aufgebaute Druckkräfte) und somit überhöht werden, während die Wülste oder Falten quer zur Materialbahn durch die aufgebauten Zugkräfte (als Reaktionskräfte zu den benachbarten Druckkräften) abgeflacht werden. Nach dem vorgeschlagenen Verfahren treten die störenden Druck- und Zugkräfte infolge der Kompensationswirkung der etwas gerafften, zick-zackförmigen Wülste nicht oder nur geringfügig auf.

Das folgende praktische Beispiel weist diese Effekte nach: In einer Materialbahn aus Aluminium AlMg₃ mit der Dicke 0,8mm wurden mit Hilfe einer 3,5mm dicken Zwischenschicht aus Elastomer (Silikon mit Shore-Härte 63) und mittels Stützelementwalze mit der hexagonalen Schlüsselweite (SW) = 50 mm im Wesentlichen isotrope Wulsttiefen mit eingeschlossenen Kalotten der nahezu gleichen Tiefe 10,8 - 11,0mm gebildet, wobei eine im Wesentlichen isotrope Biegesteifigkeit erzielt wurde.

Die isotrop tiefen Wülste und von diesen Wülsten eingeschlossenen Kalotten bieten beispielsweise für Sandwichkonstruktionen, wie Leichtbauwände verschiedenster Art einen weiteren praktischen Vorteil für ein gleichmäßiges Fügen, insbesondere Kleben, mit vorzugsweise glatten Deckschichten, zu einem Verbund. Die Klebeflächen können beispielsweise einfach mit Hilfe einer Rolle, die mit Klebstoff getränkt ist, überstrichen werden, da auf der einen Seite der strukturierten Materialbahn etwa gleich hohe Kalottenkuppen und auf der Gegenseite ein etwa gleich hohes, hexagonales Gitter der Wülste zur Verfügung stehen.

Bei einer Ausführungsform können dreidimensional strukturierte, auch tief dreidimensional strukturierte Materialbahnen in einem zweistufigen Verfahren hergestellt werden, wobei isotrop tiefe, d.h. sowohl in bzw. schräg als auch quer zur Laufrichtung der Materialbahn etwa gleich tiefe, Wülste bzw. Kalotten oder Falten bzw. Mulden gebildet werden. In einem ersten Schritt werden mit Hilfe beispielsweise einer mit hexagonalen Stützelementen ausgestatteten Stützelementwalze und einer mit gerundeten Druckelementen ausgestatteten Druckelementwalze vorzugsweise tiefe Strukturen aus Wülsten und Kalotten oder Falten und Mulden gebildet. Hierbei weisen in der Regel die Wülste bzw. Kalotten oder die Falten bzw. Mulden in bzw. schräg zur Laufrichtung etwas größere Tiefen auf als quer zur Laufrichtung der Materialbahn.

Hierzu das folgende praktische Beispiel: Im Falle einer Materialbahn aus Aluminium AlMg₃ mit der Dicke 0,8mm und der Strukturierung mittels Stützelementwalze mit hexagonal angeordneten Stützelementen der Schlüsselweite (SW) = 50 mm wurden die folgenden Tiefen der Wülste bzw. Kalotten gebildet: Tiefe 9,8 - 10,0 mm, gemessen zwischen den zick-zackförmigen Wülsten, und Tiefe 8,3 - 8,5 mm, gemessen zwischen den Wülsten quer zur Laufrichtung der Materialbahn.

Da der Werkstoff der strukturierten Materialbahn noch über große Plastifizierungsreserven verfügt, wie eigene Werkstoffuntersuchungen ergeben haben, lassen sich nach der Erfindung in einem zweiten Schritt vorzugsweise mit Hilfe derselben Stützelementwalze und einer starren, glatten Unterlage, beispielsweise aus einer harten, stabilen Kunststoffschicht (anstatt der Druckelementwalze) die quer zur Materialbahn primär (vergleichsweise flacher) ausgebildeten Wülste bzw. Kalotten oder Falten bzw. Mulden (im Beispiel: Tiefe 8,3 - 8,5 mm) etwas tiefer ausprägen, so dass eine einheitliche Tiefe aller Wülste bzw. Kalotten oder Falten bzw. Mulden (im Beispiel etwa 9,8 - 10,0 mm) gebildet wird. Erfindungsgemäß kann ein zweistufiges Verfahren in analoger Weise auch für eine isotrop tiefe Bildung von Falten bzw. Mulden einer strukturierten Materialbahn, die nach dem bekannten Beul- bzw. Wölbstrukturierungsverfahren erzeugt wurden, sowie für eine isotrop tiefe Bildung von Wülsten bzw. Kalotten einer strukturierten Materialbahn, die nach dem bekannten dreidimensional wellenförmigen Strukturierungsverfahren erzeugt wurden, angewandt werden.

Nach einem weiteren Aspekt der Erfindung ist bei der Verwendung von eher hoch- und höchstfesten Werkstoffen, wie mit sehr geringen Bruchdehnungen, vorgesehen, dass eine Materialbahn durch im Wesentlichen spontan biegende Umformung mittels eher flachem, dynamischen Durchschlag beim Strukturieren, der hörbar ist, mit dreidimensionalen Strukturen versehen wird. Hierbei wird nach der Erfindung erreicht, dass die Wülste oder Falten nur angenähert gleiche Strukturtiefen in bzw. schräg zur Laufrichtung einerseits und quer zur Laufrichtung der Materialbahn andererseits erhalten. Dieser spontane Strukturierungsvorgang unterscheidet sich von dem oben beschriebenen stetig umformenden Strukturierungsvorgang dadurch, dass die Materialbahn beim dynamischen Durchschlagen von der konvexen in die konkave Gestalt sehr schnell, quasi impulsartig, gegen die Stützelemente, die quer zur Laufbahn der Materialbahn angeordnet sind, bewegt wird, und dadurch ein Ausbilden der Wülste oder Falten quer zur Laufrichtung der Materialbahn unterstützt wird. Das ist auch notwendig, da sich insbesondere spröde Materialien aufgrund ihrer hohen Elastizität nur wenig durch Biegen umformen lassen (wegen der starken Rückfederung) und nach dem Biegen ihre Gestalt dann auch beibehalten soll.

Ferner ist die strukturierte Materialbahn nur wenig bestrebt, sich nach dem Strukturierungsvorgang eng an die Stützelementwalze anzuschmiegen. Das hat den Vorteil, dass die strukturierte Materialbahn quasi vorgerichtet die Strukturierungseinheit verlassen kann. (Hinweis beul- bzw. wölbstrukturierte Materialbahnen aus höchstfesten Werkstoffen können zwar strukturiert werden, verlassen jedoch stärker gekrümmt die Strukturierungseinheit und lassen sich deshalb nicht oder nur mit großen Schwierigkeiten in die ebene Gestalt zurückbiegen / richten,). Ein kraftvolles Wegbiegen der Materialbahn aus höchstfesten Werkstoffen von den gekrümmten Stützelementen in bzw. schräg zur Laufrichtung mit einer resultierenden Hebelwirkung ist deshalb nicht möglich. Jedoch unterstützt der dynamische Durchschlag die Bildung der dreidimensionalen Strukturen. Eigene Untersuchungen mit höchstfesten Werkstoffen haben das bestätigt. Nach dem Verfahren gemäß der Erfindung lässt sich sogar eine Materialbahn aus Magnesium - sogar bei Raumtemperatur (d.h. ohne eine konventionelle Erwärmung auf etwa 200°C) - mit mehrdimensionalen Strukturen ausstatten.

In einer Ausgestaltung des Verfahrens können anstatt der sich selbst anpassenden, elastischen Druckelemente auch starre gerundete Druckelemente zum Einsatz kommen, wobei die Kontur der starren Druckelemente im Wesentlichen der Kontur der sich im Eingriff selbst angepassten elastischen Druckelemente nachempfunden wird. Sowohl die Druckelemente als auch die Stützelemente können jeweils auf geometrisch unterschiedlichen Werkzeugträgern angeordnet sein, beispielsweise Walzen, gekrümmten Werkzeugträgern, wie mit der Geometrie eines so genannten Wiegemessers. Hierbei soll jedoch vorzugsweise die Krümmung des Werkzeugträgers zur Aufnahme der Stützelemente so gewählt werden, dass insbesondere der oben beschriebene Umklappvorgang, wie offener Durchschlag, zum Tragen kommt.

Es können anstatt der Stützelemente und der Druckelemente auch Formwerkzeuge, wie Stempel und Matrize, beispielsweise auf Walzen oder gerundeten Elementen angeordnet werden, wobei die Formwerkzeuge mit der Negativ-Kontur der Oberfläche der gewünschten Wülste oder Falten und der Kalotten oder Mulden der Materialbahn ausgestattet werden. Nach der Erfindung kann man auch zunächst eine vorzugsweise tief strukturierte Materialbahn, insbesondere aus festem Blech, herstellen und dann daraus die Formwerkzeuge bilden. Diese können beispielsweise auf einer Ober- und Unterwalze oder auf gekrümmten Werkzeugaufnehmern fixiert werden.

Beim Verfahren gemäß der Erfindung können die Vorgänge anders ablaufen, wenn faserverstärkte, insbesondere mit Kohle- oder Glasfasern verstärkte, Kunststoffbahnen, wie mit einer Matrix aus Thermoplasten oder Duroplasten, mit vorzugsweise tiefen, dreidimensionalen Strukturen ausgestattet werden. Hierbei sind die extrem geringen Bruchdehnungen der Fasern während des Strukturierens zu berücksichtigen, da insbesondere Kohle- und Glasfasern als Textilgewebe (aus langen, geraden Fasern), bei Dehnung oder bei enger Biegung leicht reißen. Hierdurch werden die Schwierigkeiten und die Herausforderungen an das dreidimensionale, tiefe Strukturieren (gegenüber dem Strukturieren metallischer Materialbahnen) noch weiter erhöht.

Um tiefe, dreidimensionale Strukturen in faserverstärkten Kunststoffen, insbesondere aus Glas- oder Kohlefasern, bilden zu können, müssen die Bedingungen für eine weitgehend isometrische Umformung nicht nur im Bereich der Wülste bzw. Falten sondern auch im Bereich der Kalotten bzw. Mulden geschaffen werden. Überlegungen zum reinen Raffen der Materialbahn führen hierbei noch nicht zum Ziel, weil sich durch eine isometrische Verformung (d.h. bei gleich bleibender Gesamtfläche, ohne Bildung von Nebenfalten und ohne deutliche Dehnungen der Materialbahn) sich tief ausgeformte Kalotten bzw. Mulden aus geometrischen Gründen eigentlich nicht herstellen lassen.

Experimentelle Untersuchungen haben jedoch überraschenderweise gezeigt, dass ein im Wesentlichen isometrisches Umformen beim dreidimensionalen, vorzugsweise tiefen Strukturieren von faserverstärkten Kunststoffen dennoch möglich ist: Wird eine glatte Prepregbahn (noch nicht ausgehärtete faserverstärkte Kunststoffbahn) zwischen zwei primär tief strukturierten, metallischen Metallbahnen, die vorher (ohne Prepregbahn) mit Hilfe einer zusätzlichen elastischen Zwischenlage und einer Stützelementwalze und einer Druckelementwalze gemeinsam (als Verbund) tief strukturiert wurden, positioniert, und dann gemeinsam als Verbund wieder der Strukturierungseinheit (bestehend aus Stützelementwalze und Druckelementwalze) zugeführt und strukturiert, können die Fasern im Bereich der zick-zackförmigen Wülste (in Laufrichtung der Prepregbahn) schrittweise jeweils von selbst eine etwas andere Richtung einnehmen als im Bereich der Kalotten. Dadurch entsteht eine komplexe Umformung. Hierbei kann sich auch von selbst die Richtung der zick-zackförmigen Wülste etwas in der Weise verändern, dass der Verlauf der einzelnen zick-zackförmigen Wüste in Laufrichtung der Materialbahn einen Winkel > 60° (anstatt 60° beim regulären Hexagon) annimmt. (Hinweis: Der Winkel wird jeweils gegenüber der Bezugslinie quer zur Laufrichtung der Materialbahn gemessen). Das erscheint visuell wie eine geometrische Streckung eines hexagonalen Gitters, wobei die Gitterstablängen (analog den Wulstlängen) näherungsweise als konstant angenommen werden können.

Dieser Effekt ist überraschend, da die Materialbahn durch das insbesondere tiefe Strukturieren in ihrer Längsrichtung gerafft, d.h. in ihrer lichten Länge (Größenordnung 10%), kürzer wird. Man hätte eigentlich erwarten können, dass - infolge dieses Raffens der strukturierten Materialbahn - der zick-zackförmige Verlauf der Wülste in Richtung der Materialbahn gestaucht wird und somit ein Winkel < 60° der einzelnen zick-zackförmigen Wülste entsteht. Das Gegenteil ist jedoch überraschend der Fall.

Dieser Effekt ist für die im Wesentlichen isometrische Umformung, insbesondere beim tiefen dreidimensionalen Strukturieren der faserverstärkten Kunststoffbahn, bedeutsam. Er Effekt lässt sich anschaulich mit Hilfe einer rein geometrischen Betrachtung folgendermaßen erklären: Ein symmetrisches, hexagonales Gitter umschließt aus geometrischen Gründen in der zunächst als eben angenommenen Gestalt der Materialfläche eine etwas größere Fläche als ein rechteckiges oder quadratisches Gitter, wenn die Gesamtsumme aller Gitterstablängen gleich ist. (Hinweis: Deshalb haben die Bienen in der Evolution die Hexagonalstruktur ihrer Bienenwaben so "ausgewählt", um mit möglichst wenig Baumaterial möglichst viel Honig einzulagern).

Wenn die Fläche der faserverstärkten Kunststoffbahn im Wesentlichen beim Strukturieren gleich bleiben soll und sich von selbst anstatt der regulären zick-zackförmigen Gestalt (mit Winkel = 60°), modifizierte zick-zackförmige Wülste (mit Winkel > 60°) bilden (entspricht tendenziell einem Zwischenzustand hin zum rechteckigen Gitter), wird bei im Wesentlichen gleicher Gesamtlänge aller Wülste geometrisch eine kleinere "lichte" Fläche (in der Draufsicht) eingenommen. Dadurch wird eine geometrische Differenzfläche in der Materialbahn gebildet, die nun quasi als "überschüssige" Materialfläche frei zur Verfügung steht und bei der Strukturierung der faserverstärkten Kunststoffbahn von selbst für eine vertiefte, isometrische Ausformung der Kalotten vorteilhaft genutzt werden kann.

Im Folgenden wird ein praktisches Beispiel genannt: Ein Prepreg aus Verstärkungsmaterial (Fasern als Textil) und duromerer Kunststoffmatrix wurde zwischen zwei primär, gemeinsam mit einer elastischen Zwischenlage (3,5 mm Silikonschicht), hexagonal strukturierten metallischen Materialbahnen mit der Schlüsselweite des Hexagons = 50 mm) positioniert und dann strukturiert. Es ergaben sich in der so strukturierten faserverstärkten Kunststoffbahn gebildete Kalotten mit der Tiefe = 10,5 mm, gemessen zwischen den zick-zackförmigen Wülsten, und gebildete Kalotten mit der Tiefe = 9,2 mm, gemessen zwischen den Wülsten quer zur Laufrichtung der faserverstärkten Kunststoffbahn.

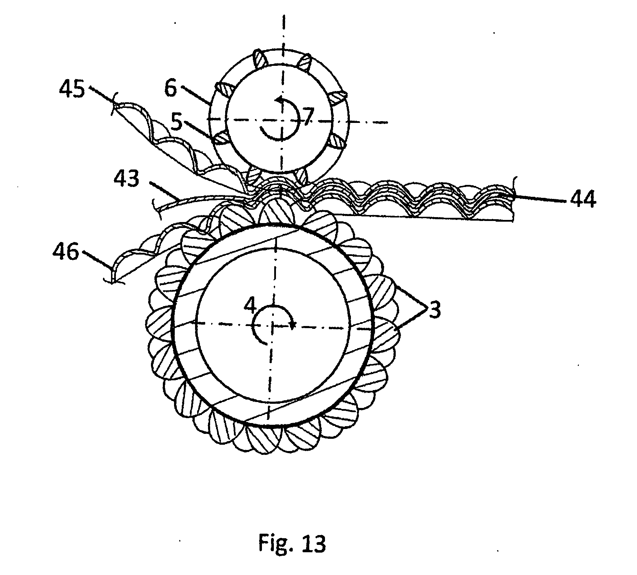

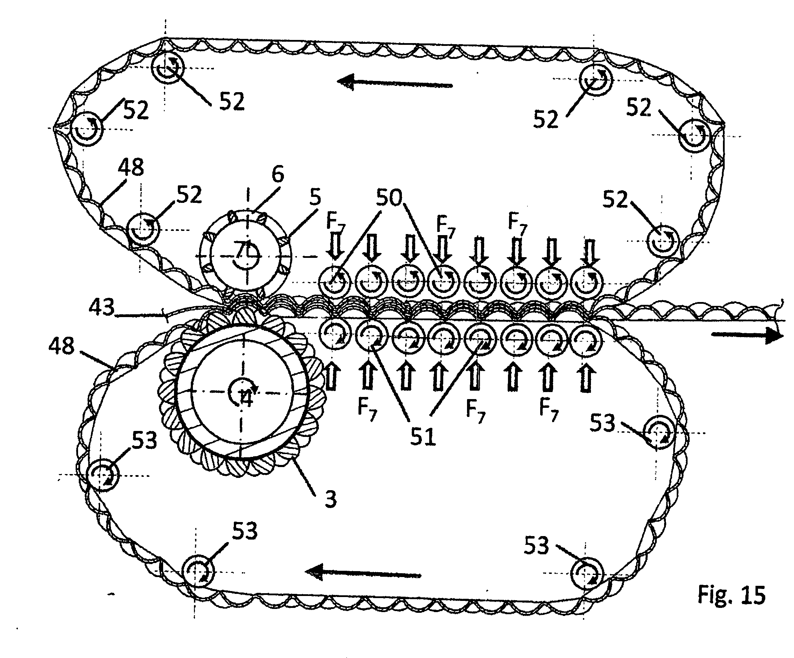

Ein wirtschaftlicher Zusatznutzen dieser Verfahrensvariante nach der Erfindung besteht darin, dass die primär tief strukturierten, vorzugsweise metallischen Materialbahnen nach dem Strukturierungsprozess von der strukturierten, faserverstärkten Kunststoffbahn wieder entfernt werden können und dann in einem kontinuierlichen Herstellungsprozess quasi als Schleifen gemeinsam mit der nachfolgenden, eingeschlossenen, glatten, faserverstärkten Kunststoffbahn wieder der Strukturierungseinheit zugeführt werden können. Diese genannten Varianten werden anhand der Fig. 13 und Fig. 15 beispielhaft beschrieben. In einer weiteren Variante gemäß der Erfindung können die zuvor primär strukturierten, metallischen Materialbahnen um die beiden Walzen der Strukturierungseinheit gewickelt und fixiert werden und auf diese Weise als Formwerkzeuge auf den Walzen für das Strukturieren dienen. Dabei entspricht die Negativ-Kontur der oberen und unteren Strukturierungswalze der gewünschten Kontur der strukturierten, vorzugsweise faserverstärkten Kunststoffbahn. Allerdings können in der zuletzt genannten Variante einige Nebenfalten im Bereich der strukturierten faserverstärkten Kunststoffbahn auftreten.

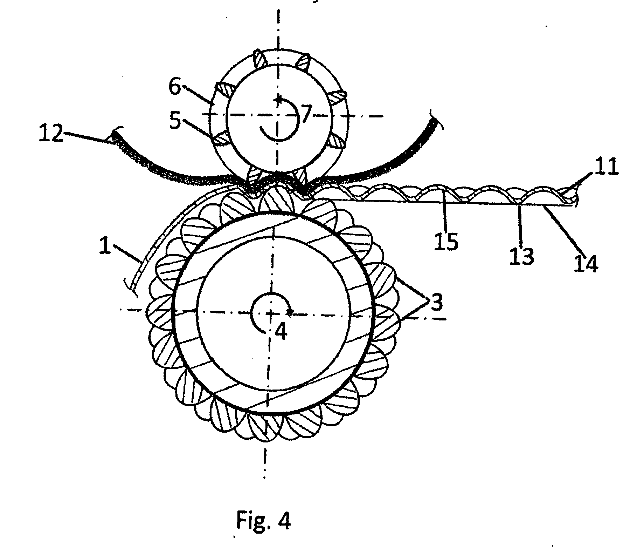

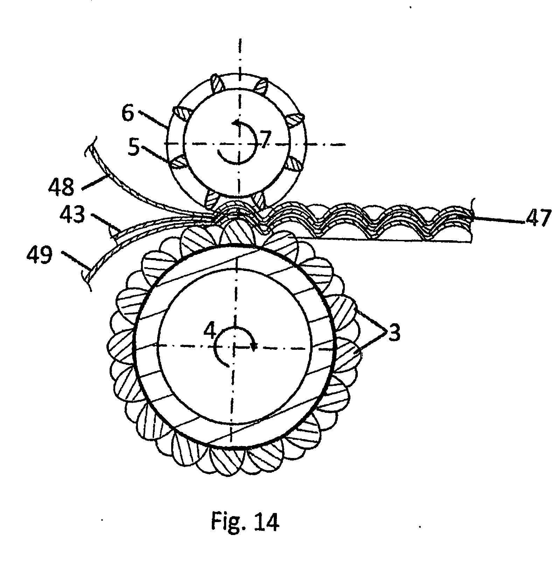

In einer weiteren Variante des Verfahrens zum Herstellen einer insbesondere faserverstärkten Kunststoffbahn nach der Erfindung kann die im Wesentlichen isometrische, tiefe Strukturierung durch ein gemeinsames Strukturieren eines Verbundes, bestehend aus einer glatten, metallischen oberen und unteren Materialbahn und der glatten faserverstärkten Kunststoffschicht durchgeführt werden. Hierbei laufen im Wesentlichen andere physikalische Vorgänge ab: Infolge eines flächigen Reib- und Formschlusses (mit gebildeten Scherkräften) zwischen den metallischen Materialbahnen und der faserverstärkten Kunststoffbahn kann sich die faserverstärkte Kunststoffbahn materialschonend, ohne die Entstehung großer Zugkräfte im Bereich der Kalotten bzw. Mulden, den sich in den metallischen Materialbahnen bildenden Strukturen anpassen. Das wird mit Hilfe einer zusätzlichen elastischen Zwischenlage zwischen der oberen metallischen Materialbahn und der Stützelementwalze noch begünstigt. Mit anderen Worten: Durch den Eingriff der gerundeten Druckelemente auf der Druckelementwalze werden lediglich die metallischen Bereiche der Kalotten der metallischen Materialbahnen etwas plastifiziert, nicht jedoch die eingeschlossene faserverstärkte Kunststoffbahn. Die Reibung zwischen den metallischen Wänden und der Oberfläche der faserverstärkten Kunststoffschicht gestattet quasi ein materialschonendes Nachrutschen derselben. Diese Variante wird später anhand der Kombination von Fig. 4 und Fig. 14 unten beschrieben.

Im Folgenden wird ein Beispiel genannt: Ein Prepreg aus Verstärkungsmaterial (Fasern im Textil) und duromerer Kunststoffmatrix wurde zwischen zwei glatte metallische Materialbahnen positioniert und dann gemeinsam mit einer elastischen Zwischenlage (3,5 mm Silikonschicht), strukturiert (Schlüsselweite des Hexagons = 50 mm). Es ergaben sich in der faserverstärkten Kunststoffbahn gebildete Kalotten mit einer Tiefe = 8,2 mm, gemessen zwischen den zick-zackförmigen Wülsten, und gebildete Kalotten mit einer Tiefe = 7,9 mm, gemessen zwischen den Wülsten quer zur Laufrichtung der faserverstärkten Kunststoffbahn.

Ein Verbund aus vorzugsweise tief strukturierter, metallischer Ober- und Unterschicht und einer eingeschlossenen festen, schallarmen, faserverstärkten Kunststoffschicht kann verschiedene praktische Anwendungen finden.

Eine auf diese Weise drastisch verbesserte und zugleich nahezu isotrope Versteifung von den faserverstärkten Kunststoffen eröffnet auch neue Möglichkeiten für den Einsatz von Naturfasern sowie von biologisch abbaubaren Kunststoffen. In der deutschen Fernsehsendung "Abenteuer Forschung" des ZDF am 4. August 2010 wurde das große Problem der zunehmenden Verschmutzung der Umwelt, wie der Weltmeere, wegen der Langlebigkeit (nicht abbaubar) von Kunststoffen und darin enthaltenen Erbgut- und Gesundheit schädigenden Chemikalien (für die erwünschten Gebrauchseigenschaften der Kunststoffe, wie Festigkeit, Umformbarkeit, Weichheit, Härte, Glattheit und Farbe), der Öffentlichkeit deutlich gemacht. Mit Hilfe der vorzugsweise tief strukturierten Kunststoffe, insbesondere faserverstärkten Kunstoffe nach der Erfindung könnte auf der Basis von Naturstoffen, wie Naturfasern und biologisch abbaubaren Kunststoffen, die vergleichsweise geringeren Festigkeiten der Naturfasern sowie der biologisch abbaubaren Kunststoffe (gegenüber den technischen Kunststoffen bzw. faserverstärkten Kunststoffen) zumindest teilweise oder vielleicht sogar ganz wieder ausgeglichen werden.

Nach einem weiteren Aspekt der Erfindung lassen sich mehrdimensional strukturierte Profile herstellen, wobei vorzugsweise in einem integrierten kontinuierlichen Umformprozess die strukturierte Materialbahnen gemäß der Erfindung mit einer strukturierten Profilkante ausgestattet werden, wodurch die Profile insbesondere gegenüber dem Aufbiegen der Profilflanken und bei Torsion sehr versteift werden und störende Verzüge vermieden werden. Erfindungsgemäß wird für die Herstellung dieser strukturierten Profile nur eine einzige Umformstufe oder nur eine geringe Anzahl von Umformstufen benötigt, da die unerwünschten Bandkantendehnungen beim bekannten Rollformen von Profilen aufgrund der kompensatorischen Wirkung der Strukturen in Membranrichtung der Materialbahn gemäß der Erfindung vermieden oder zumindest stark eingeschränkt werden können. Nach der Erfindung wird die Profilkante zwecks isometrischer Umformung dadurch gekennzeichnet, dass sich die Ausgangsfläche nicht oder nur unwesentlich ändert und die Profilkante mit versteifenden und zugleich definiert raffenden Strukturen ausgestattet wird.

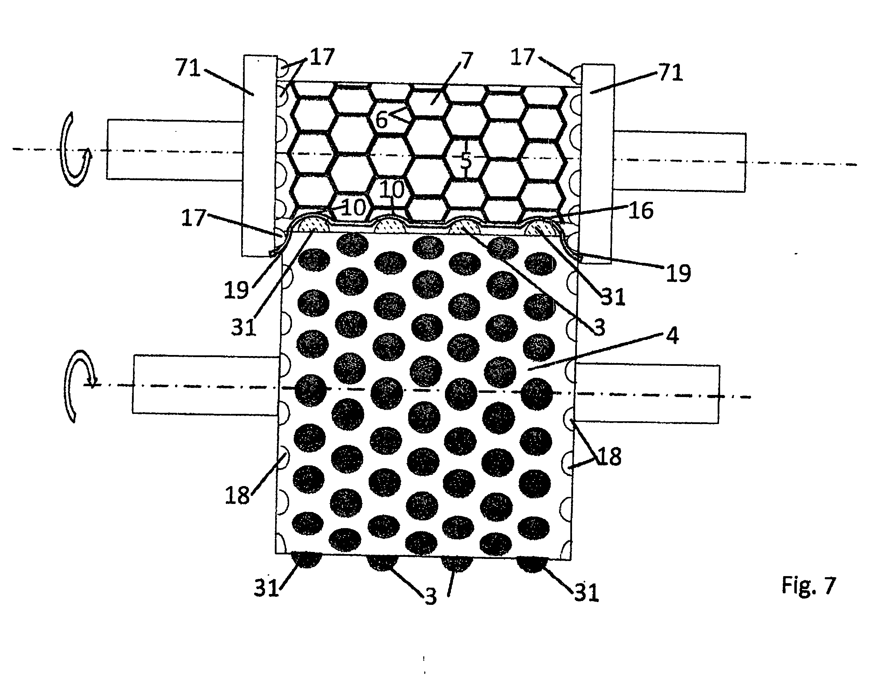

Diese Strukturen in der Profilkante sind den dreidimensionalen Strukturen im Bereich des Profilbodens geometrisch angepasst. Hierzu werden in Teilbereichen, insbesondere in den beiden Randbereichen der Materialbahn, Erhebungen von vorzugsweise gekrümmten Stempeln, die der Anordnung der Strukturen der Materialbahn geometrisch versetzt angepasst sind, örtlich gegen diejenige Seite der Materialbahn, wo die konkave Kontur der Mulden / Kalotten gebildet sind, drücken, und von der Gegenseite weitere konvex gerundete Druckelemente, die zwischen den Erhebungen der Stempeln angeordnet sind, partiell gegen die Materialbahn drücken, wobei die in den Profilkanten gebildeten Mulden / Kalotten vorzugsweise zwischen den angrenzenden Mulden / Kalotten angeordnet werden. Auf diese Weise kann ein Profil, vorzugsweise rollprofiliertes Profil, wie ein U- oder L-förmiges Profil, mit einem strukturierten Profilboden und strukturierten Profilkanten bzw. Profilflanken gebildet werden, wobei die Raffungen in Längsrichtung der / des Materialbahn / Profils in den Bereichen Profilboden und Profilkanten bzw. Profilflanken gleich oder zumindest nahezu gleich sind. Weitere Erklärungen hierzu erfolgen später anhand der Figuren 7 bis 9 sowie Fig. 12 unten.

Nach einem weiteren Aspekt der Erfindung lassen sich mehrdimensional strukturierte, vorzugsweise flache Schalen herstellen. Dabei kann die Schale eine zweidimensionale Krümmung (zylindrische Krümmung) aufweisen, die in Längs- oder Querrichtung der Materialbahn angeordnet ist. Ferner kann eine Schale eine dreidimensionale Krümmung, d.h. mit einer überlagerten Krümmung in Längs- und Querrichtung der Materialbahn, erhalten. Die Varianten zur Fertigung der unterschiedlichen Schalen werden im Folgenden näher erläutert: Eine zweidimensional, in Querrichtung der Materialbahn, gekrümmte Schale kann durch eine Querraffung, die im Bereich der beiden Ränder größer ist als die Raffung im mittleren Bereich der strukturierten Materialbahn und stetig vom Rand zur Mitte der Materialbahn geringer gebildet wird, erzeugt werden. Diese Querraffung kann beispielsweise von selbst durch eine Verwendung von Bahnwerkstoffen mit vergleichsweise erhöhtem elastischen Verhalten bzw. durch variables Reibverhalten, aber auch durch unterschiedlich hohe Druckelemente quer zur Laufrichtung der Materialbahn ausgelöst werden.

Eine zweidimensional in Längsrichtung der Materialbahn gekrümmte Schale kann durch ein gezieltes Biegen der strukturierten Materialbahn, vorzugsweise direkt am Austritt aus der Strukturierungseinheit, hergestellt werden. Eine Schale mit einer dreidimensionalen Krümmung, die eine überlagerte Krümmung in Längs- und Querrichtung der Materialbahn besitzt, kann durch ein überproportionales Raffen von allen Rändern einer strukturierten Platine, entnommen aus der Materialbahn, gebildet werden.

Das überproportionale Raffen der Ränder kann beispielsweise durch Einbringen von insbesondere wellenförmigen Nebenformelementen, die durch angepasste Werkzeugeingriffe erzeugt werden, erreicht werden. In Laufrichtung können diese Nebenformelemente an den seitlichen Rändern der Materialbahn integriert, d.h. während des Strukturierens, eingebracht werden. Das Einbringen der Nebenformelemente quer zur Laufrichtung kann erfindungsgemäß in einem sekundären Schritt nach dem Strukturieren der Materialbahn mit Hilfe von Werkzeugeingriffen, insbesondere gemeinsam mit dem Trennprozess (Schneiden), erfolgen.

Alternativ kann das überproportionale Raffen in Längsrichtung der Materialbahn durch eine integrierte, strukturgerechte Abkantung der Ränder der Materialbahn erreicht werden, wobei die überproportionale Raffung durch vergleichsweise tiefere Strukturen im Bereich der abzukantenen Ränder der Materiabahn erfolgt. Einzelheiten hierzu werden im Zusammenhang mit dem Herstellen von strukturierten Materialbahnen später anhand der Figuren unten erläutert.

Bei der Verwendung von insbesondere tief strukturierten, geraden oder vorzugsweise gekrümmten Materialbahnen können für eine einteilige oder zweiteilige Verstärkungsschale einer Motorhaube oder eines Kotflügels für den Fußgängerschutz die folgenden synergetischen Eigenschaften: leicht, stabil, hohe Plastifizierungsreserven für den Crashfall, sogar für dünnwandige, auch höherfeste Stahlbleche oder Leichtbaulegierungen, wie beispielsweise Aluminium und Magnesium, sekundäre Umformbarkeit aufgrund der hohen Plastifizierungsreserven und der Atmungsreserven, geringer Bauraum und günstige akustische Eigenschaften, wie reduziertes Dröhnen, vorteilhaft genutzt werden. Analoge vorteilhafte Eigenschaften sind auch für Sitzwände, Trennwände, Sandwichwände aus Metall oder Kunststoffen, vorzugsweise faserverstärkten Kunststoffen, auch aus Naturfasern und biologisch abbaubaren Kunststoffen, bis hin zu luftdurchlässigen dünnen Wänden oder Schalen aus Lochblech oder Gewebe vorteilhaft anzuwenden. Das gilt insbesondere für das Fahrzeugwesen, die Luft- und Raumfahrt, wie für leichte Solarpaneele, sowie für das Bauwesen.

Bei der Verwendung von strukturierten Profilen, insbesondere als mehrdimensional versteiftes Halbzeug, stehen die synergetischen Eigenschaften: hohe Biegesteifigkeit des Profilbodens und der Profilflanken und hohe Steifigkeit gegenüber dem Aufbiegen der Profilflanken und hohe Torsionssteifigkeit, beispielsweise als Zwischenprodukt für eine leichte und stoßenergieabsorbierende Verstärkungsschale oder für ein Profilbauteil, insbesondere für die Fahrzeugtechnik, und ferner für Leichtbauwände im Bauwesen im Vordergrund.

### Beschreibung bevorzugter Ausführungsbeispiele der Erfindung

Die Erfindung wird im Folgenden anhand von Ausführungsbeispielen unter Bezugnahme auf Figuren einer Zeichnung näher erläutert. Hierbei zeigen:
- Fig. 1: schematisch Elemente einer Vorrichtung zur kontinuierlichen Herstellung einer tief mehrdimensional strukturierten Materialbahn,
- Fig. 2: schematischen Elemente einer Vorrichtung zur Herstellung einer tief strukturierten Materialbahn (vergleichbar zu Fig. 1),
- Fig. 3: schematisch die Draufsicht eine hexagonal strukturierte Materialbahn,
- Fig. 4: schematisch den Aufbau einer Vorrichtung zur Herstellung einer tief dreidimensional wellenförmig strukturierten Materialbahn,
- Fig. 5: schematisch den Aufbau einer Vorrichtung zur Herstellung einer strukturierten Materialbahn in zwei Querschnitten,
- Fig. 6: schematisch eine perspektivische Draufsicht auf eine Materialbahn mit ihren Wellenbergen und Wellentälern,
- Fig. 7: schematisch den Aufbau einer Vorrichtung zur Herstellung einer tief strukturierten Profilbahn mit einer strukturierten Profilkante,
- Fig. 8: analog zu Fig. 7 den schematischen Aufbau einer Vorrichtung zur Herstellung einer tief strukturierten Profilbahn,
- Fig. 9: schematisch den Aufbau einer Vorrichtung zur Herstellung einer tief strukturierten Profilbahn mit einer strukturierten Profilflanke,
- Fig. 10: schematisch die Draufsicht auf eine ebene tief strukturierte, rechteckige Materialbahn mit einem hexagonal strukturierten Mittelbereich aus Kalotten oder Mulden,
- Fig. 11: schematisch eine Anwendung einer tief strukturierten Materialbahn als Verstärkungsschale einer Motorhaube für den Fußgängerschutz beim Kopfaufprall,
- Fig. 12: schematisch den Aufbau einer Vorrichtung zur Herstellung eines tief strukturierten Profils, das in einem einzigen Herstellungsschritt zugleich mit strukturangepassten Profilkanten versehen wird,
- Fig. 13: schematischen den Aufbau einer Vorrichtung zur Herstellung einer tief strukturierten Kunststoffbahn, insbesondere faserverstärkten Kunststoffbahn, die in einem kontinuierlichen Herstellungsprozess aus einer glatten faserverstärkten Kunststoffbahn gebildet wird,
- Fig. 14: schematisch den Aufbau einer Vorrichtung zur Herstellung einer tief strukturierten Kunststoffbahn, insbesondere faserverstärkten Kunststoffbahn, die in einem kontinuierlichen Herstellungsprozess als Verbund aus einer glatten Kunststoffbahn und zwei glatten, vorzugsweise metallischen Materialbahnen gemeinsam strukturiert gebildet wird,
- Fig. 15: schematisch den Aufbau einer Vorrichtung zur Herstellung einer tief strukturierten faserverstärkten Kunststoffbahn, die in einem kontinuierlichen Herstellungsprozess aus einer glatten Prepregbahn gebildet wird, und
- Fig. 16: schematisch den Aufbau einer modifizierten Vorrichtung zur Herstellung einer tief strukturierten faserverstärkten Kunststoffbahn, wobei eine glatte Prepregbahn zwischen zwei strukturierten, vorzugsweise metallischen strukturierten, Materialbahnen gemeinsam der Strukturierungseinheit zugeführt wird und als gemeinsamer Verbund strukturiert wird.

Fig. 1 zeigt den schematischen Aufbau einer Vorrichtung zur kontinuierlichen Herstellung einer tief mehrdimensional strukturierten Materialbahn 2, wobei die konvex gerundeten Druckelemente 3 einer Druckelementwalze 4 eine glatte Materialbahn 1 gegen die Stützelemente 5 und 6 (Stützelemente 6 in Fig. 1 nur als Sichtkante erkennbar) einer Stützelementwalze 7 drücken. Damit sich die strukturierte Materialbahn 2 nicht von selbst eng an die Stützelementwalze 7 anschmiegt (bei F₁ = 0), wird die Materialbahn 2 bereits während des Strukturierens durch die äußere Kraft F₂ > 0 von der Stützelementwalze 7 weg in eine näherungsweise gerade Gestalt gebogen. Diese äußere Kraft F₂ > 0 und die dadurch erzeugte Hebelwirkung hat eine besondere Bedeutung für den Prozess zwecks Schonung des Bahnwerkstoffes im Bereich der gebildeten Wülste oder Falten einerseits und zur Ausbildung von vorzugsweise tief eingebrachten Strukturen andererseits. Für die Bildung der Wülste sind die Stützelemente 5,6 mit sanft gerundeten Konturen (erläutert in Fig. 4) ausgestattet, während für die Bildung der Falten die Stützelemente 5, 6 mit eng gerundeten Konturen ausgestattet sind. Während des Rotierens der beiden Walzen 4 und 7 kann sich die mitbewegte Materialbahn 1 in ihrer Laufrichtung raffen. Ein Stützelement 5 drückt infolge der Hebelwirkung der angreifenden Kräfte F₂, F₃, F₄ am Ort der angreifenden Kraft F₄ in die Materialbahn 1 ein, und so wird eine Falte 8 quer zur Laufrichtung der Materialbahn schon früh erzeugt und dann etwas später in der tiefsten Position des Stützelementes 5 weiter vorzugsweise tief ausgeformt (siehe Fig. 2). Dieses schrittweise Eingreifen von Stützelementen wurde in der Beschreibung mit sequenziellem Eingreifen bezeichnet.

Das grenzt dieses Verfahren gegenüber den bekannten Strukturierungsverfahren, wie dem bekannten Beul- bzw. Wölbstrukturierungsverfahren und dem dreidimensional wellenförmigen Strukturieren ab: Das Verfahren gemäß der Erfindung unterscheidet sich beispielsweise vom bekannten Beul- bzw. Wölbstrukturieren wesentlich dadurch, dass beim letzteren eine elastische Schicht auf der Druckelementwalze gleichzeitig die Materialbahn gegen mindestens zwei in Laufrichtung der Materialbahn aufeinander folgende Stützelemente 5 drückt (das Beul- bzw. Wölbstrukturierungsverfahren ist in Fig. 1 nicht explizit dargestellt).

Beim bekannten Beul- bzw. Wölbstrukturierungsverfahren wird also eine Kavität, welche von allen Seiten für jeweils eine einzelne, wie hexagonale, Strukturbildung abgestützt wird, von Stützelementen umrandet, gleichzeitig mit Druck beaufschlagt, und beim Überschreiten eines kritischen Beuldruckes wird somit ein "abgeschlossener" Durchschlag eines gekrümmten Materialbahnbereiches, auslöst. Im Verfahren gemäß der Erfindung findet stattdessen ein "offener" Durchschlag statt, wobei die Stützelemente 5 und 6 die gekrümmte Materialbahn im Bereich einer einzigen zu erzeugenden, wie hexagonalen, Struktur nicht simultan von allen Seiten abstützen. Dadurch kann die Materialbahn insbesondere in Längsrichtung raffen, und so wird eine Reduzierung der Wanddicke im Bereich der Falten vollständig oder zumindest näherungsweise vermieden.

Untersuchungen haben gezeigt, dass ohne diese Hebelwirkung zwar tiefe Mulden gebildet werden können, jedoch keine markant ausgeformten Wülste oder Falten entstehen können. Letzteres wäre beispielsweise der Fall, wenn eine glatte Materialbahn 1, eng angeschmiegt an die Stützelementwalze 7, der Strukturierungseinheit zugeführt würde und in diesem angeschmiegten Zustand durch Gegendrücken der Druckelementwalze 4 strukturiert und schließlich im angeschmiegten Zustand (an die Stützelementwalze 7) dann von der Strukturierungseinheit abgeführt würde. Hierbei könnten sich keine markant ausgeformten Wülste oder Falten bilden, weil dabei durch das Andrücken der Druckelemente 3 die Materialbahn 1 lediglich in die Kavität hineingezogen und somit lediglich die Kalotten oder Mulden gebildet würden werden. Die markant ausgebildeten Wülste oder Falten benötigen für ihre Entstehung insbesondere einen dynamischen Effekt oder ein verstärktes Andrücken, wie durch die Hebelwirkung. Die markant ausgebildeten Wülste oder Falten, im Folgenden kurz Wülste oder Falten genannt, werden jedoch für eine hoch versteifende Wirkung der strukturierten Materialbahn 2 benötigt.

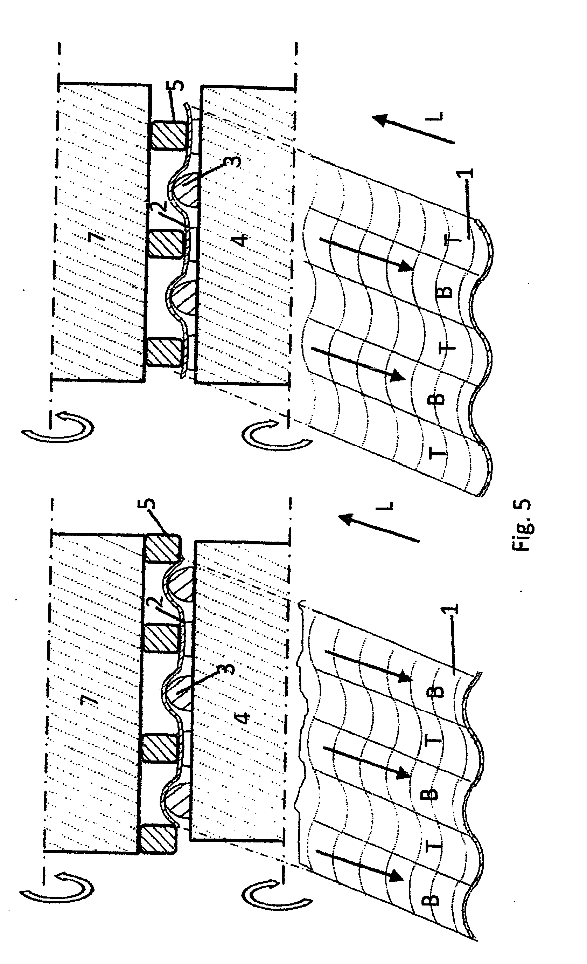

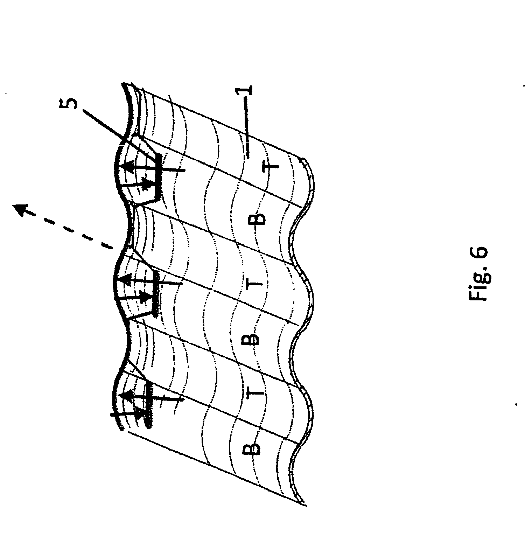

Zur Erzeugung der ausgebildeten Wülste oder Falten 8, 9 kann die oben genannte Hebelkraft in ihrer Auswirkung noch verstärkt werden. Das kommt durch einen weiteren positiven Effekt zustande, der insbesondere anhand der Fig. 5 und Fig. 6 erläutert wird. Lediglich bei sehr duktilen Werkstoffen bzw. tief eingebrachten Wülste oder Falten kann die Hebelwirkung eine untergeordnete Rolle spielen, da das plastische Werkstoffverhalten mehr in den Vordergrund tritt. Die Stützelemente 5 und 6 gemäß der Erfindung weisen vorzugsweise eine gerundete Kontur auf, damit der Bahnwerkstoff möglichst geschont wird.

Wie eine solche gerundete Kontur der Stützelemente 5 und 6 gefunden werden kann, wird später anhand von Fig. 4 erläutert. In der Fig. 1 ist nur die Herstellung einer strukturierten Materialbahn dargestellt, wobei durch die Einstellung der Hebelkraft F₂ die Materialbahn eben gerichtet die Strukturierungseinheit verlässt. Alternativ kann auch eine in Laufrichtung zweidimensional gekrümmte, strukturierte Materialbahn hergestellt werden, wobei vorzugsweise durch eine modifizierte Hebelkraft F₂ lokale konvexe oder konkave Krümmungen in der strukturierten Materialbahn gebildet werden.

Fig. 2 zeigt analog zu Fig. 1 den schematischen Aufbau einer Vorrichtung zur Herstellung einer tief strukturierten Materialbahn 2 in einer Stellung, wo die tiefste Position des Stützelementes 5 explizit dargestellt ist (am Ort des Eingriffs der Kraft F₆). Schematisch ist ein Hebel als durchgezogener Strich dargestellt, um die angreifenden Kräfte F₂, F₅, F₆ anschaulich darzustellen. Hierdurch wird die große Hebelkraft F₆ deutlich, die aus dem kleinen Hebelarm von den Angriffspunkten der Kräfte F₅ und F₆ gegenüber dem großen Hebelarm von den Angriffspunkten der Kräfte F₂ und F₅ resultiert. Durch diese große Hebelkraft F₆ wird die Materialbahn 1 zusätzlich insbesondere gegen das Stützelement 5 gedrückt und so die Wulst oder Falte 8 gut ausgeformt.

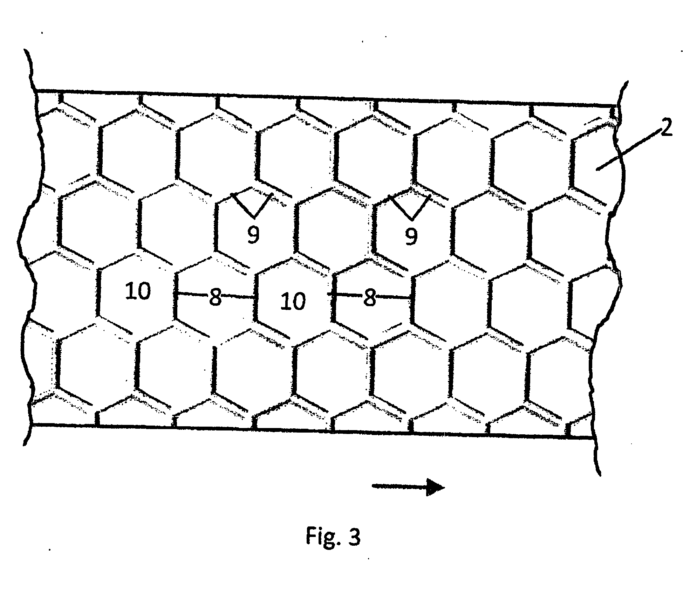

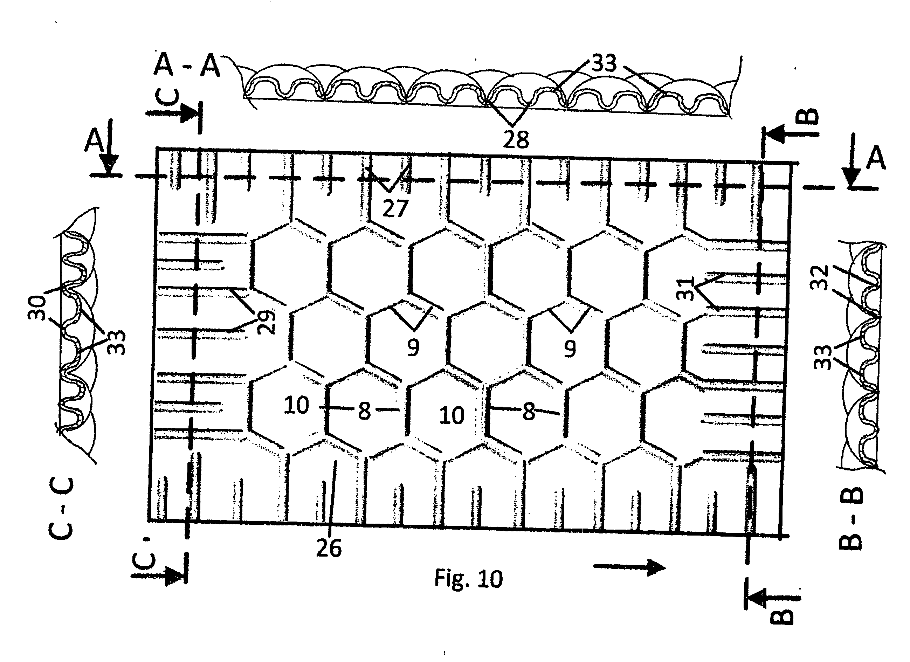

Fig. 3 zeigt schematisch die Draufsicht auf eine gemäß Fig. 1 und Fig. 2 hexagonal strukturierte Materialbahn 2 mit den Wülsten oder Falten 8 quer zur Richtung der Materialbahn 2, den zick-zackförmigen Wülsten oder Falten 9 in Richtung der Materialbahn 2 und den Kalotten oder Mulden 10. Die in Fig. 3 schematisch dargestellte strukturierte Materialbahn 2 wurde zu einer etwa ebenen Gestalt (gerichtet) hergestellt. Alternativ kann auch eine schalenförmige, strukturierte Materialbahn gebildet werden, die später explizit in Fig. 10 dargestellt wird.

Fig. 4 zeigt den schematischen Aufbau einer Vorrichtung nach der Erfindung zur Herstellung einer tief dreidimensional wellenförmig strukturierten Materialbahn 11. Hierbei wird zwischen der Stützelementwalze 7 mit ihren Stützelementen 5, 6 zusätzlich eine elastische Materialbahn 12 (wie Gummi) geführt, wodurch, analog wie beim bekannten dreidimensional wellenförmigen Strukturieren, die örtlich eingequetschte elastische Materialbahn 12 gemeinsam mit den Stützelementen 5, 6 individuell angepasste Stützkonturen erzeugt. Hierdurch werden die vorzugsweise sanfter gerundeten Falten, kurz Wülste 13, 14 genannt, sowie die eher kugelförmig ausgeformten Mulden, kurz Kalotten 15 genannt, gebildet. Alternativ können die so gebildeten Rundungen der erzeugten Wülste 13, 14 und Kalotten 15 in der Gestalt von Negativ-Konturen für starre Stützelemente auf Stützelementwalzen oder anders geformten Werkzeugträgern verwendet werden. Solche starren Stützelemente können in der Vorrichtung in Fig. 1 Anwendung finden.

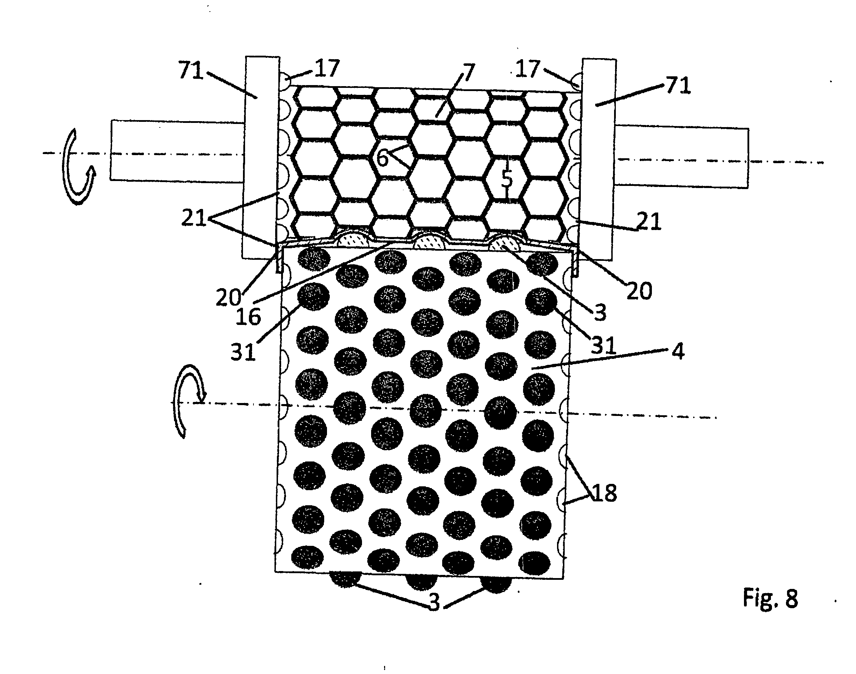

Fig. 5 zeigt den schematischen Aufbau einer Vorrichtung zur Herstellung einer strukturierten Materialbahn 2 in zwei Querschnitten während der Eingriffe der Stützelemente 5 auf der Stützelementwalze 7 und der gerundeten Druckelemente 3 auf der Druckelementwalze 4 gegen die Materialbahn 2 (obere Darstellungen in Fig. 5). In dieser schematischen Darstellung wurde auf die Stützelemente 6 verzichtet (eine anschauliche Gesamtdraufsicht ist in Fig. 7 und Fig. 8 dargestellt).

Die beiden Darstellungen rechts und links in Fig. 5 unterscheiden sich dadurch, dass die Anordnungen der Stützelemente 5 und der Druckelemente 3 durch eine kleine Rotationsbewegung der beiden Walzen um eine halbe Strukturweite (im Falle eines Hexagons die halbe Schlüsselweite / SW) versetzt sind. Bei einer geraden oder angenähert geraden Zuführung der Materialbahn 1 in die Strukturierungseinheit können sich rücklaufend in der Materialbahn 1 - entsprechend dem Eingriff der Druckelemente 3 - eine wellenförmige Gestalt im Querschnitt der Materialbahn 1 ausbilden.

Im linken Bild von Fig. 5 (oben im Querschnitt und unten in einer perspektivischen Draufsicht vor dem Einlauf in die Strukturierungseinheit) entstehen so von links nach rechts ein Wellenberg (B), ein Wellental (T), ein Wellenberg (B) usw.. Im Gegensatz dazu bilden sich im rechten Bild von Fig. 5 entsprechend von links nach rechts ein Wellental (T), ein Wellenberg (B), ein Wellental (T) usw.. Im Ergebnis findet also ein fortlaufend alternierendes Umbilden von Wellenbergen zu Wellentälern und umgekehrt in der Materialbahn 1 während des Strukturierungsprozesses statt. Bei einer gekrümmten Zuführung der Materialbahn 1 in die Strukturierungseinheit, wie beim bekannten Beul- bzw. Wölbstrukturieren, wobei die Materialbahn partiell um die Stützelementwalze, die einen deutlich kleineren Durchmesser aufweist als die Druckwalze, angelegt wird, wäre eine solche selbstständige Bildung von Wellenbergen und Wellentälern nicht möglich, weil eine in Längsrichtung gekrümmte Materialbahn aufgrund der versteifenden Wirkung ihrer Krümmung nicht einfach (ohne störende Faltenbildung) quer zur Materialbahn 1 gebogen werden kann. Für den Fall, dass die zugeführte glatte Materialbahn 1 vorzugsweise entgegen der Krümmung der Stützelementwalze, also beispielsweise anliegend an der Druckelementwalze, der Strukturierung zugeführt wird, können sich zwar die sich bildenden Wellenberge und Wellentäler nicht weit rückwärts in der glatten, gekrümmten Materialbahn ausbreiten. Sie sind im Ansatz aber dennoch vorhanden und äußern sich dadurch, dass sich die Materialbahn - unmittelbar vor dem Eingriff der Stützelemente 5 - lokal quer zur Laufrichtung der Materialbahn etwas aufwölbt (siehe Bereich Bezugszeichen 8, links in Fig. 1), wodurch die eingreifenden Stützelemente 5 eine gut ausgeformte (markante) Wulst oder Falte ausbilden können.

Anhand der Fig. 5 lässt sich auch ein weiterer Effekt anschaulich beschreiben: die vom Rand der Materialbahn stetig zum mittleren Bereich hin abnehmende Querraffung. Vereinfachend wurde in der Fig. 5 nur eine geringe Anzahl von Stützelementen 5 quer zur Laufbahn der Materialbahn dargestellt. Unmittelbar am Rand der Materialbahn kann das Material während der Struktureinbringung fast ungehindert quer zur Laufrichtung nachfließen. Durch den Eingriff der Stütz- und Druckelemente wird durch einen Formschluss mit der Blechbahn das Quer-Nachfließen des Materials vom Rand zur Mitte hin stetig zunehmend behindert. Dadurch werden die Strukturen zum Rand hin tiefer ausgebildet als in der Mitte der Materialbahn, und erzeugen so einen Raffungsgradienten.

Fig. 6 zeigt schematisch eine perspektivische Draufsicht auf eine Materialbahn 1 mit ihren Wellenbergen und Wellentälern entsprechend der Fig. 5 im Bildteil rechts unten (vor Eintritt in die Strukturierungseinheit). Im Zusammenhang mit den Erläuterungen der Fig. 1 und Fig. 3 kann nun erklärt werden, warum die Stützelemente 5 bereits am Eintritt der Materialbahn 1 (d.h. vor der tiefsten Position der Stützelemente 5) die Wülste oder Falten 8 bilden können. Da bei einer vorzugsweise hexagonal herzustellenden Strukturierung die Stützelemente 6 (in Fig. 1 lediglich als Sichtkante zu erkennen) vorzugsweise zick-zackförmig in Richtung der Materialbahn (entsprechend den gebildeten Wülste oder Falten 9 in Fig. 3) und ferner sowohl die Stützelemente 5 (quer zur Materialbahn) als auch die Druckelemente 3 schräg versetzt gegen die Materialbahn 1 drücken, entstehen fortlaufend alternierend versetzte Durchschläge bzw. elastisch-plastische Umklappvorgänge in der Materialbahn. Hierdurch kann die Materialbahn im Bereich der zu bildenden Kalotten oder Mulden umklappen und dadurch gut ausgeformte Wülste oder Falten entstehen lassen und gleichzeitig insbesondere in Richtung der Materialbahn raffen. Hierdurch wird verständlich, warum insbesondere auch bei der Anwendung von hoch elastischen Werkstoffen, wie höchstfeste Stahlbleche, hochlegierte Aluminiumbleche, wie "Titanal" oder Magnesiumblech sogar bei Raumtemperatur, markante Wülste oder Falten gebildet werden können, weil durch den dynamischen Durchschlag die Materialbahn sehr schnell, quasi impulsartig, gegen die Stützelemente, insbesondere gegen die Stützelemente 5 (quer zur Materialbahn) gedrückt wird. Dieser Effekt ist gut zu hören. Überraschenderweise wird dennoch der Werkstoff vergleichsweise schonend umgeformt, da die Materialbahn raffen kann und Zugkräfte in den Wülsten oder Falten weitgehend vermieden werden.

In Fig. 5 und Fig. 6 sind schematisch nur die zeitlichen Momentaufnahmen der sich quer zur Materialbahn 1 bildenden Wellen dargestellt. Infolge der in Laufrichtung der Materialbahn beim Strukturieren zeitlich versetzt eingreifenden gerundeten Druckelemente und zick-zackförmigen Stützelemente werden in der Materialbahn beim Strukturierungsvorgang alternierende, mehrdimensionale Krümmungen gebildet, welche die Durchschlageffekte und somit die Strukturbildung verstärken. Diese alternierenden, mehrdimensionalen Krümmungen in der Materialbahn sind in Fig. 5 und Fig. 6 nicht explizit dargestellt.

Fig. 7 zeigt den schematischen Aufbau einer Vorrichtung zur Herstellung einer tief strukturierten Profilbahn mit einer strukturierten Profilkante. Auf der Strukturierungswalze 7 sind die axial, d.h. quer zur Laufrichtung der Materialbahn, angeordneten Stützelemente 5 und die zick-zackförmig in Umfangsrichtung, d.h. in Laufrichtung der Materialbahn, angeordneten Stützelemente 6 dargestellt. Auf der Druckelementwalze 4 sind die Druckelemente 3 angeordnet. Der Profilboden (mittlerer Bereich des Profils 16) wird in analoger Weise wie die Materialbahn in Fig. 1 strukturiert. In der Fig. 7 befinden sich die beiden seitlich angeordneten Druckelemente 31 gerade im Eingriff, wobei alternierend angepasste Mulden 19 auf der Innenseite der Ränder des Profilbodens 16 und versetzt dazu auf der Außenseite die angepassten Mulden 19 in der strukturierten Profilkante gebildet werden. Die angepassten Mulden 19 in der strukturierten Profilkante 16 werden dadurch gebildet, dass gerundete Druckelemente 17, die auf einem mit der Stützelementwalze 7 fest verbundenem Ring 71 fixiert sind, die Materialbahn in die angepassten Kavitäten 18, die in den umlaufenden Kanten der Druckelementwalze 4 eingearbeitet sind, drücken. Die Kontur der konvex gerundeten Druckelemente 17 entspricht der Negativ-Kontur der konkaven Kavitäten 18. Wenn die Raffung im Bereich der Profilkante gleich der Raffung im Bereich des Profilbodens ist, wird ein gerades Profil gebildet. Wenn die Raffung im Bereich der Profilkante größer oder kleiner ist, wie beispielsweise durch vergleichsweise tiefer ausgeformte Kavitäten 18 (in Fig. 7 nicht explizit dargestellt) erzeugt, als die Raffung im Bereich des Profilbodens, wird ein gekrümmtes Profil gebildet.

Fig. 8 zeigt analog zu Fig. 7 den schematischen Aufbau einer Vorrichtung zur Herstellung einer tief strukturierten Profilbahn 16 mit einer strukturierten Profilkante, wobei sich die beiden Walzen 4, 7 gerade um eine halbe Struktur gegenüber der Stellung von Fig. 7 etwas weiter gedreht haben. Hierbei befinden sich die beiden seitlichen Druckelemente 31 nicht im Eingriff. Die Ecken 20 in den beiden strukturierten Profilkanten werden dadurch gebildet, dass die glatten Kanten (zwischen den einzelnen Kavitäten 18) der Druckelementwalze 4 von innen gegen die Profilbahn drücken und von der Gegenseite die glatten Flanken 21 (zwischen den einzelnen Druckelementen 17) der beiden seitlichen Ringe 71 gegen die Profilbahn drücken und einen kantenartigen Abschnitt in der Profilkante bilden.

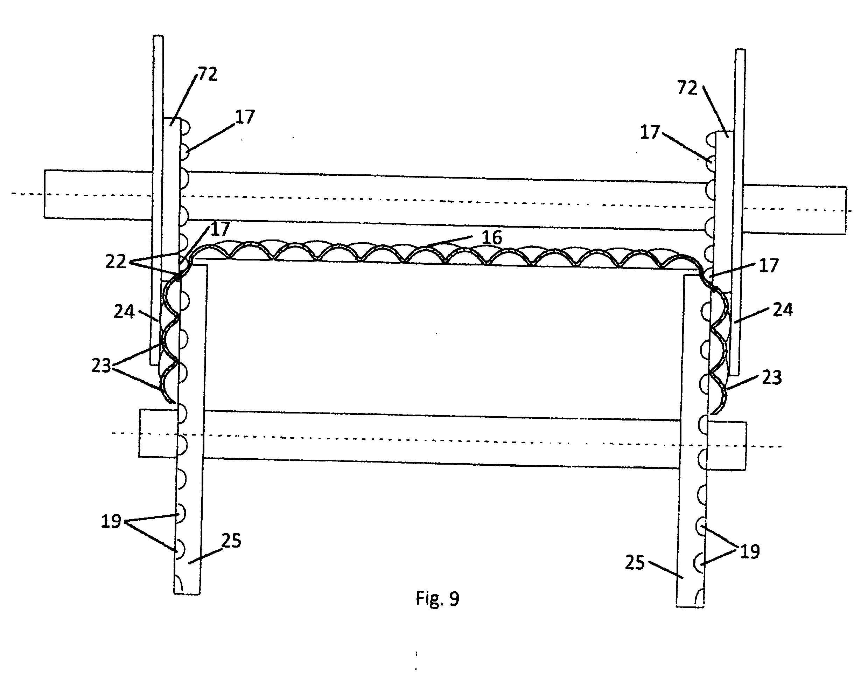

Fig. 9 zeigt den schematischen Aufbau einer Vorrichtung zur Herstellung einer tief strukturierten Profilbahn 16 mit einer strukturierten Profilflanke 23. Diese Vorrichtung in Fig. 9 baut auf die Erfahrungen aus der Vorrichtung in Fig. 1 bzw. Fig. 2 sowie auf der Vorrichtung in Fig. 7 bzw. Fig. 8 auf. In einer ersten Prozeßstufe wird eine Materialbahn 1, wie analog der Fig. 1 bzw. Fig. 2, zu einer strukturierten Materialbahn 2 umgeformt (in Fig. 9 nicht explizit dargestellt). In der zweiten Prozeßstufe (entsprechend dieser Fig. 9) wird dann die strukturierte Materialbahn mit einer strukturierten Profilkante und einer strukturierten Profilflanke ausgestattet. Hierzu drücken im Bereich der zu bildenden Profilkante entweder die äußeren Druckelemente 17, die auf zwei Ringen 72 fixiert sind, und die Kavitäten 18 der Druckelementwalze 4 (analog Fig. 7) oder - nach einem Weiterdrehen der beiden Walzen um eine halbe Strukturweite - die glatten Ringflanken 22 und die seitlichen Kanten der Druckelementwalze 4 gegen die strukturierte Materialbahn. Hierzu sind die Kontur der Druckelemente 17 und die Kontur der Kavitäten 18 etwa der Kontur der Kalotten oder Mulden 10 angepasst, sodass vorzugsweise eine isometrische oder zumindest nahezu isometrische Umformung in der Profilkante stattfindet.

Mit Hilfe der Flanken der beiden zusätzlichen Ringe 24, die seitlich neben den Ringen 72 auf einer gemeinsamen Welle angeordnet sind, und den beiden seitlichen geraden Flanken einer Ringscheibe 25 mit den eingearbeiteten Kavitäten 18 werden die beiden Randbereiche der strukturierte Materialbahn zu den strukturierten Profilflanken 23 umgeformt. Alternativ können auch konventionell strukturierte (wie mechanisch geprägte) Materialbahnen auf analoge Weise zu strukturierten Profilen umgeformt werden. Beim Ablängen (Schneiden quer zur Laufrichtung eines endlosen Profils) ist darauf zu achten, dass an der Schnittkante die Strukturen, insbesondere die tiefen Strukturen möglichst nicht teilweise oder ganz wieder eingeebnet werden, um Verzüge des Profils zu vermeiden. Das kann beispielsweise mit Hilfe einer rotierenden Kappsäge oder eines Lasers erfolgen. Ein abgelängtes Profil mit einer strukturangepassten Profilkante bzw. Profilflanke ist in den Fig. 7 bis 9 nicht explizit dargestellt.

Fig. 10 zeigt schematisch als Beispiel die Draufsicht auf eine ebene tief strukturierte, rechteckige Materialbahn mit einem hexagonal strukturierten Mittelbereich aus Kalotten oder Mulden 10, die von Wülsten oder Falten 8, 9 eingeschlossen werden, sowie mit wellenförmig strukturierten Rändern. Dabei ist die Strukturtiefe der wellenförmigen Ränder deutlich keiner als die der tiefen hexagonalen Strukturen im mittleren Bereich (vorteilhaft für beispielsweise späteres Fügen der Ränder).

Anstatt der wellenförmigen Randstrukturen können auch geometrisch modifiziert gebildete Randstrukturen mit kleinen Strukturtiefen, incl. kleineren, etwa hexagonalen Übergangsstrukturen, in Anlehnung an die in DE 10 2005 025 620 A1 dargestellten Randstrukturen, zur Anwendung kommen. Die wellenförmig strukturierten Ränder weisen im Wesentlichen die gleiche Raffung auf wie die des strukturierten Mittelbereiches. Da das Hexagon der mittleren Strukturen eine 60°-Symmetrie und die Schale eine 90°-Symmetrie besitzt, kann die geometrische Anpassung der wellenförmigen Strukturen in und quer zur Richtung der rechteckigen, strukturierten Schale unterschiedlich sein.

In Längsrichtung der rechteckigen Schale (Schnitt A - A) sind die wellenförmigen Strukturen 27 (in Draufsicht), 28 (im Querschnitt) unterschiedlich lang. Hierdurch passen sich die jeweils längeren Wülste oder Falten (von 27) dem hexagonalen Gittermuster der Wülste oder Falten 8, 9 des Mittelbereiches an. Die jeweils kürzeren Wülste oder Falten (von 27) der Randbereiche ermöglichen einen sanft gekrümmten, angepassten und materialstoffschonenden Übergang von den wellenförmigen Randbereichen zu den angrenzenden, tiefen Strukturkonturen 8, 9, 10 des Mittelbereiches. Die wellenförmige Gestalt der Wülste oder Falten an den Rändern quer zur Laufrichtung der rechteckigen, strukturierten Schale 26 weist zwei unterschiedliche Varianten (Schnitt B - B, Schnitt C - C) auf. Hierbei sind im Falle des Schnittes B - B die Abstände der Wülste oder Falten 29 (in Draufsicht) und 30 (im Querschnitt) zueinander etwa gleich, wenn die Wülste oder Falten der wellenförmigen Randstrukturen nicht an einem Eckpunkt des Hexagons angrenzen. Im Falle des Schnittes C - C sind die Abstände der Wülste oder Falten 31 (in Draufsicht) und 32 (im Querschnitt) verschieden, wenn die Wülste oder Falten der wellenförmigen Randstrukturen direkt an einem Eckpunkt des Hexagons angrenzen.

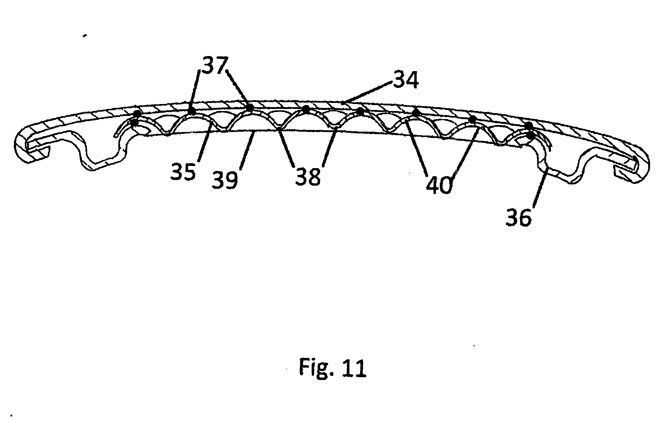

Die beispielhaft in Fig. 10 dargestellten, insbesondere wellenförmigen, Randstrukturen können in einer separaten Vorrichtung mittels gerändelter Formrollen oder angepasster Formwerkzeuge (in Fig. 10 nicht explizit dargestellt) in die dreidimensional strukturierte Materialbahn eingebracht werden, wobei die Konturen der Formrollen oder Formwerkzeuge der Negativ-Kontur der in Fig. 10 dargestellten wellenförmigen Randstrukturen entspricht. Alternativ können die wellenförmig strukturierten Ränder mit einer überproportionalen Raffung ausgestattet werden gegenüber der Raffung des strukturierten Mittelbereiches. Auf diese Weise kann die Bildung einer mehrdimensional gekrümmten Schale realisiert werden. Dann nehmen die Darstellungen der Schnitte (Schnitt A - A, Schnitt B - B, Schnitt C - C) (diese sind in Fig. 10 nicht explizit dargestellt, werden jedoch im Zusammenhang mit der Fig. 11 wieder aufgegriffen) eine gekrümmte Gestalt an. Der Schritt des Einbringens der insbesondere wellenförmigen Randstrukturen an den beiden seitlichen Rändern einer Materialbahn kann auch direkt in den Herstellungsprozess des Strukturierens der Materialbahn (analog zu Fig. 7 und Fig. 8, anstelle der strukturierten Profilkanten 19, 20) integriert werden.

Fig. 11 zeigt den schematischen Aufbau einer Anwendung des Verfahrens nach der Erfindung einer tief strukturierten Materialbahn als Verstärkungsschale einer Motorhaube für den Fußgängerschutz beim Kopfaufprall. Die Motorhaube ist beispielhaft aus einer äußeren glatten Motorhaubenschale 34 (im Sichtbereich), aus einer insbesondere tief strukturierten Verstärkungsschale 35, wie aus Stahl- oder Aluminiumblech, und einem Verstärkungsrahmen 36 zusammengesetzt und mit Hilfe von Klebepunkten 37 bzw. durch Umlegen der Ränder der äußeren Motorhaubenschale gefügt. Eigene Untersuchungen zum tiefen Strukturieren, insbesondere zum tiefen, dreidimensional wellenförmigen, Strukturieren haben ergeben, dass sich mit Hilfe insbesondere der Wülste eine bessere, d.h. gleichmäßigere und eher werkstoffschonende, Cashperformance, beispielsweise beim Kopfaufprall, ergibt als bei der mit Falten ausgestatteten, wie der beul- bzw. wölbstrukturierten, Verstärkungsschale.

Die folgenden drei Ursachen sind darin begründet, dass erstens die Wülste eine sanftere Rundung aufweisen als die Falten und deshalb weniger plastifiziert werden, zweitens die Anordnung der Kalotten auf der Außenseite der konvex gekrümmten Verstärkungsschale einfacher, d.h. mit verminderter Gefahr der Instabilität und des Einknickens der Strukturen, erfolgt als bei den Falten (beim Gegenbiegen knicken die Falten leichter ein als die Wülste), drittens die Deformation von Wülsten im Crashfall gutartiger erfolgt als bei der Deformation von mit Falten ausgestatteten Verstärkungsschalen.

Die dritte Ursache resultiert insbesondere daraus, dass die Wülste aufgrund ihrer sanfteren Rundungen bei der Crashdeformation über ein größeres und vermehrt mehrachsiges Umformvermögen verfügen, als die Falten, da letztere bei einer mehrachsigen Deformation, wie im Crashfall, sich unkontrolliert örtlich scharfkantig ausformen können, dann instabil werden und schließlich einknicken könnten. Letzteres widerspricht einer möglichst gleichmäßigen Deformation und Energieaufnahme, wie beim körperverträglichen Kopfaufprall einer Motorhaube.

Ferner wird mit Hilfe der nach der Erfindung erzielten Strukturtiefe erreicht, dass ein ausreichender Deformationsraum des Verbundes aus äußerer Motorhaubenschale und tief strukturierter Verstärkungsschale, beispielsweise mit einem lichten Abstand von etwa 10mm zueinander, im Falle beispielsweise einer hexagonal (Schlüsselweite / SW = 50mm) strukturierten Verstärkungsschale, zur Verfügung steht, um einerseits den gesetzlich erforderten HIC-Wert < 1000 einzuhalten und andererseits den Deformationsraum aus Platzgründen nicht größer zu wählen als unbedingt notwendig ist. Bei den bekannten Beul- bzw. Wölbstrukturen mit Strukturhöhen von etwa 3 bis 4 mm (im Fall einer Hexagonalstruktur der Schlüsselweite SW = 50mm) erwies sich der Deformationsraum als noch zu klein, während der Deformationsraum von einer mit konventionellen Näpfen der Höhe von ca. 22mm unbefriedigend groß (und damit zu Lasten des engen Bauraumes zwischen Motorhaube und Motorblock bzw. Packaging geht) ist.

Im Folgenden wird ein Beispiel beschrieben: Eine Materialbahn aus Aluminium der Dicke 0,8mm wurde mit hexagonal angeordneten Wülsten mit der Schlüsselweite SW = 50 mm und der Kalottentiefe ca. 9,5 mm ausgestattet. Nachdem diese strukturierte Materialbahn etwas gekrümmt (entsprechend etwa der Krümmung einer Haube eines Autos aus der Mittelklasse) und mit einem glatten Blech zu dem Verbund (analog dem mittleren Bereich einer Motorhaube) verklebt wurde, folgten Fallversuche analog dem Fußgängeraufprall (ca. 5 kg Kugel bei einer Fallhöhe, entsprechend 40 km / h Fahrgeschwindigkeit) am Beispiel eines Ausschnittes ca. 450mm x 400mm aus dem mittleren Bereich einer Motorhaube. Die Auswertung ergab einen HIC-Wert von etwa 750 und bestätigt die Unterschreitung des gesetzlich geforderten HIC-Wertes = 1000. Als strukturierte Verstärkungsschale kann vorzugsweise entweder eine dreidimensional gekrümmte, mit Randstrukturen, beispielsweise wellenförmigen Randstrukturen analog Fig. 10, versehene Verstärkungsschale 26 zum Einsatz kommen, deren Ränder mit dem Verstärkungsrahmen 36 gefügt, wie geklebt, wird oder eine dreidimensional gekrümmte, ohne Randstrukturen versehene Verstärkungsschale 26 zum Einsatz kommen, die mit einem Verstärkungsrahmen, in dessen Randbereiche die Negativ-Konturen der vorzugsweise hexagonalen Strukturen der Verstärkungsschale eingearbeitet sind, gefügt, wie geklebt werden. Dieses Prinzip zum Herstellen einer mehrdimensional vorzugsweise tief strukturierten, crashrelevanten Verstärkungsschale kann beispielsweise auch für Bereiche eines Kotflügels angewandt werden.

Alternativ kann im Zusammenhang mit der in Fig. 10 beschriebenen strukturierten Materialbahn bzw. flachen Schale, ein deutlich breiterer Randbereich (im Vergleich zu Fig. 10) der flach wellenförmig oder fein hexagonal (analog zu DE 10 2005 025 620 A1) strukturierten Ränder für sekundäre Umformprozesse genutzt werden. So können strukturierte Bauteile mit einer komplexen Geometrie, wie beispielsweise eine "einteilige" Verstärkungsschale, wie für eine Motorhaube oder für einen Kotflügel für den Fußgängerschutz, hergestellt werden.

Die Vorteile hierbei bestehen darin, dass erstens der Fügeprozess zum Verbinden eines tief strukturierten, crashrelevanten Mittelbereiches 35 mit dem Verstärkungsrahmen 36 entfallen kann und zweitens die großen Plastifizierungsreserven im Bereich der strukturierten Ränder (analog Fig. 10) sowie deren "Atmungsreserven" (gemeint sind die infolge des Raffens verfügbaren Materialreserven als quasi "überschüssiges" Bahnmaterial) für die sekundäre Umformung des integrierten Bereiches des Versteifungsrahmens 36 vorteilhaft genutzt werden können.

Allerdings beschränkt sich die Anwendung zunächst noch auf geometrisch einfache Bauteile. Diese zuletzt genannte Variante ist in Fig. 11 nicht explizit dargestellt. Diese beschriebenen Varianten nach der Erfindung zeichnen sich dadurch aus, dass bei der Strukturierung des crashrelevanten, vorzugsweise tief strukturierten, mittleren Bereiches der Verstärkungsschale im Wesentlichen die isometrische Verformung beim Strukturieren absoluten Vorrang hat, und auf diese Weise erstens auch höherfeste Werkstoffe aus Stahl sowie Leichtbaulegierungen, wie aus Aluminium und Magnesium mit vergleichsweise geringen Dehngrenzen zu verwenden sind, und zweitens in den sekundär weiter umzuformenden Bereichen, insbesondere Randbereichen, große Plastifizierungs- und Atmungsreserven zur Verfügung stehen.

Bei den konventionellen Strukturierungs- und Umformverfahren mittels Formwerkzeugen in einer Presse ist das nicht möglich, weil die Randbereiche des Werkstücks quasi eingesperrt werden und eine deutliche Vergrößerung der Ausgangsfläche der Materialbahn nicht zu vermeiden ist. In modifizierter Weise kann erfindungsgemäß beispielsweise eine "einteilige" Verstärkungsschale für eine Motorhaube für den Fußgängerschutz dadurch erzeugt werden, dass die Topographie der oben gefundenen "einteiligen" Verstärkungsschale verwendet wird, um Formwerkzeuge, wie Stempel und Matrize oder Wirkmedium und Matrize, mit der im Wesentlichen gleichen Topographie auszustatten. Allerdings wird hierbei der Werkstoff der zu verformenden Materialbahn mehr plastifiziert, weil insbesondere das Raffen behindert wird.

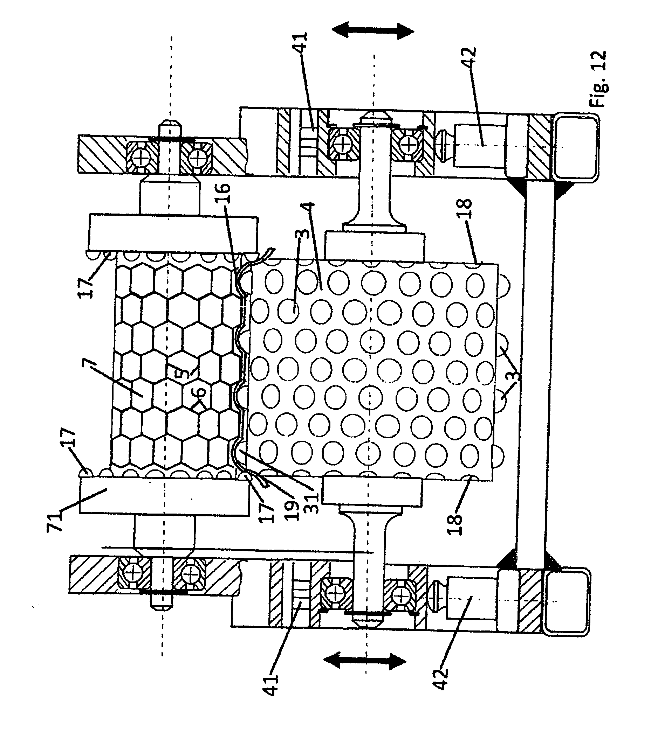

Fig. 12 zeigt den Aufbau einer Vorrichtung zur Herstellung eines tief strukturierten Profils 16, das in einem einzigen Herstellungsschritt zugleich mit strukturangepassten Profilkanten 19 versehen wird. Der Aufbau in Fig. 12 entspricht dem schematischen Aufbau in Fig. 7 und Fig. 8 und zeigt zusätzlich die beiden senkrechten Führungsschienen (Schwalbenschwanzführung) 41 und die beiden hydraulischen Hubkolben 42 zum Andrücken der Druckwalze gegen die zu strukturierende Materialbahn und gegen die Stützelementwalze. Die Vorrichtung zur Einstellung der Hebelkraft zum Biegen der strukturierten Materialbahn bzw. des Profils weg von der Stützelementwalze 7 befindet sich unmittelbar hinter der Strukturierungseinheit und ist in der Fig. 12 nicht explizit dargestellt. Wenn anstatt eines geraden Profils ein gekrümmtes Profil hergestellt werden soll, werden die Hebelkraft entsprechend modifiziert und die überproportionale Raffung (positiv für eine konvexe Profilkrümmung bzw. negativ für eine konkave Profilkrümmung) durch eine Anpassung der Konturen der Druckelemente 17 und der Kavitäten 18 (tiefer für eine positiv überproportionale Raffung bzw. flacher für eine negativ überproportionale Raffung) realisiert.

Fig. 13 zeigt den schematischen Aufbau einer Vorrichtung zur Herstellung einer tief strukturierten Kunststoffbahn, insbesondere faserverstärkten Kunststoffbahn 44, die in einem kontinuierlichen Herstellungsprozess aus einer glatten faserverstärkten Kunststoffbahn 43 gebildet wird. Die Strukturierungseinheit besteht aus der Druckwalze 4 mit ihren Druckelementen 3 und der Stützelementwalze 7 mit ihren Stützelementen 5, 6, wobei die glatte faserverstärkte Kunststoffbahn 43 zwischen vorzugsweise metallischen, tief strukturierten Materialbahnen 45 und 46 geführt wird. Die strukturierten Materialbahnen 45 und 46 können von der strukturierten Kunststoffbahn wieder entfernt werden (siehe auch Fig. 15). Es können aber auch die strukturierten Materialbahnen 45 und 46 einen verbleibenden stabilen Verbund mit der Kunststoffbahn, wie einer ausgehärteten Prepregbahn ergeben. Diese ist sehr formsteif und schallarm (in Fig. 10 nicht explizit dargestellt). Ferner können anstatt der beiden strukturierten Materialbahn 45 und 46 auch lediglich eine einzige strukturierte metallische Materiabahn, verbunden mit der strukturierten Kunststoffbahn, zur Anwendung kommen.

Fig. 14 zeigt den schematischen Aufbau einer Vorrichtung zur Herstellung einer tief strukturierten Kunststoffbahn, insbesondere faserverstärkten Kunststoffbahn 47, die in einem kontinuierlichen Herstellungsprozess als Verbund aus einer glatten Kunststoffbahn 43 und zwei glatten, vorzugsweise metallischen Materialbahnen 48 und 49 gemeinsam strukturiert gebildet wird. Die Strukturierungseinheit besteht aus der Druckwalze 4 mit ihren Druckelementen 3 und der Stützelementwalze 7 mit ihren Stützelementen 5 und 6. Die strukturierten Materialbahnen 48 und 49 können von der strukturierten Kunststoffbahn 47 wieder entfernt werden und getrennt zur Anwendung kommen. Es kann aber auch der strukturierte Verbund zur Anwendung kommen.

Fig. 15 zeigt den schematischen Aufbau einer Vorrichtung zur Herstellung einer tief strukturierten faserverstärkten Kunststoffbahn, die in einem kontinuierlichen Herstellungsprozess aus einer glatten Prepregbahn 43 gebildet wird. Der eigentliche Strukturierungsprozess läuft analog zur Fig. 13 ab. Der wesentliche Unterschied gegenüber Fig. 13 besteht darin, dass die der Strukturierungseinheit, bestehend aus Druckwalze 4 und Stützelementwalze 7, zugeführten vorzugsweise metallischen, strukturierte, obere bzw. untere Materialbahnen 48 in einem Kreislauf geführt werden und laufend wieder genutzt werden können. Dadurch können die beiden strukturierten Materialbahnen 48 zugleich sowohl für das Strukturieren der glatten Prepregbahn 43 als auch für den anschließenden Prozess des Endaushärtens der strukturieren Prepregbahn unter erhöhtem Druck und bei erhöhter Temperatur genutzt werden.

Der für die Endaushärtung der strukturieren Prepregbahn erforderliche Druck wird mittels oberer Druckrollen 50 und unterer Druckrollen 51 erreicht, die jeweils mit der Kraft F₇ örtlich gegen die beiden strukturierten Metallbahnen 48 drücken. Die hohe Biegesteifigkeit sogar vergleichsweise dünner, strukturierter Materialbahnen 48 führt zu einer gleichmäßigen Druckverteilung auf die strukturierte faserverstärkte Kunststoffbahn.

Die großen Plastifizierungsreserven der strukturierten metallischen Materialbahnen 48, wie aus Edelstahl, und ihre vorzugsweise sanften Rundungen der Wülste erlauben dennoch ein gutmütiges, wiederholtes Umbiegen der strukturierten Materialbahnen 48 an den oberen Umlenkrollen 52 und den unteren Umlenkrollen 53 bei der laufenden Rückführung. Die obere und untere Heizvorrichtung zur Erwärmung des Verbundes aus oberer und unterer, strukturierter Materialbahn 48 kann beispielsweise durch konvektive oder auch durch induktive Wärmeübertragung im Bereich der Druckrollen 50, 51 erfolgen. Diese wurde in Fig. 15 nicht explizit dargestellt.

Ferner wurde nicht derjenige Fall in Fig. 15 explizit dargestellt, wobei die beiden strukturierten Materialbahnen die glatte Prepregbahn 43 (die Begründung erfolgte bereits bei der Beschreibung von Fig. 13) bereits vor dem Eintritt einschließen und gemeinsam der Strukturierungseinheit zugeführt werden. In einer weiteren Variante von Fig. 15, die ebenfalls nicht explizit dargestellt ist, kann vorzugsweise zwischen der oberen strukturierten Materialbahn 48 und der Stützelementwalze 7 zusätzlich eine elastische Materialbahn (analog Bezugszeichen 12 in Fig. 4) geführt werden. Hierdurch kann eine verbesserte, gleichmäßige Druckverteilung beim Strukturieren der Prepregbahn aufgebaut werden, sodass sowohl eine tief strukturierte als auch sanft gerundete, und somit eine sehr materialschonend strukturierte Prepregbahn gebildet werden kann.

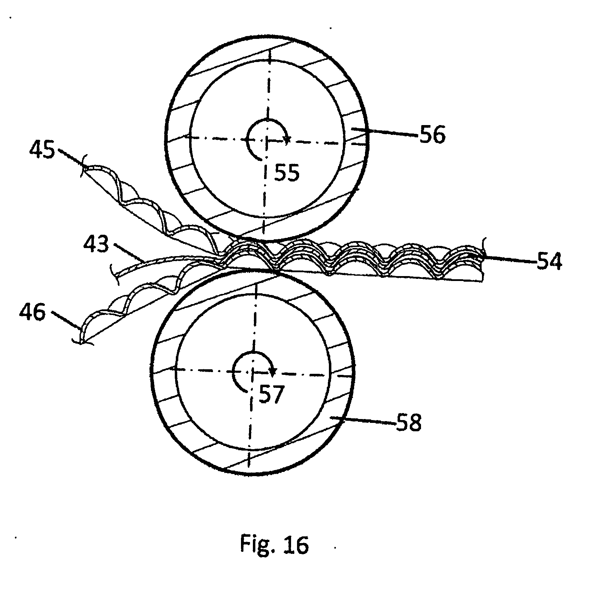

Fig. 16 zeigt den schematischen Aufbau einer modifizierten Vorrichtung zur Herstellung einer tief strukturierten faserverstärkten Kunststoffbahn 54, wobei eine glatte Prepregbahn 43 zwischen zwei strukturierten, vorzugsweise metallischen strukturierten, Materialbahnen 45, 46 gemeinsam der Strukturierungseinheit zugeführt wird und als gemeinsamer Verbund strukturiert wird. Die Strukturierungseinheit besteht aus einer oberen Druckwalze 55, die mit einer glatten Elastomerschicht 56 umgeben ist und einer unteren Druckwalze 57, die ebenfalls mit einer glatten Elastomerschicht 58 umgeben ist.

## Patentansprüche

1. Verfahren zum mehrdimensional Strukturieren einer flachen Materialbahn (1), wobei das Verfahren die folgenden Schritte umfasst:
- Zuführen einer flachen Materialbahn (1) in einen Arbeitsbereich einer Vorrichtung zum mehrdimensional Strukturieren, wobei:
- die Vorrichtung mit einem Druckelementeträger (4) und einem zugeordneten Stützelementeträger (7) gebildet ist, die zum Führen der Materialbahn (1) in einer Laufrichtung gegenläufig drehbar gelagert sind und in dem Arbeitsbereich im Eingriff stehen,
- auf einer gekrümmten Oberfläche des zugeordneten Stützelementeträgers (7) mittels Stützelementen (5, 6) eine wenigstens abschnittsweise zusammenhängende Muldenstruktur gebildet ist und
- auf einer gekrümmten Oberfläche des Druckelementeträgers (4) Druckelemente (3) angeordnet sind, die vereinzelt und erhaben ausgeführt und jeweils einer Mulde aus der Muldenstruktur zugeordnet sind,
und
- Strukturieren der Materialbahn (1) beim Hindurchführen der Materialbahn (1) entlang der Laufrichtung durch den Arbeitsbereich,
**dadurch gekennzeichnet, dass** im Schritt zum Strukturieren der Materialbahn (1):
- die Materialbahn (1) mittels biegender Umformung vorstrukturiert wird, indem die Materialbahn (1) aufgrund einer Druckbeaufschlagung durch die Druckelemente (3) lokal in eine dem jeweiligen Druckelement (3) auf dem zugeordneten Stützelementeträger (7) zugeordnete Mulde durchschlägt, derart, dass erste Strukturelemente, nämlich Kalotten oder Mulden, und die ersten Strukturelemente umgebende, zweite Strukturelemente gebildet werden, nämlich Wülste im Fall der Kalotten und Falten im Fall der Mulden,
- das lokale Durchschlagen in Form offener Durchschläge ausgeführt wird, bei denen sich die Materialbahn (1) nur an einen Teil der Stützelemente (5, 6) anlegt, derart, dass die Stützelemente (5, 6) die gekrümmte Materialbahn im Bereich einer zu erzeugenden Struktur nicht simultan von allen Seiten abstützen, und
- die vorstrukturierte Materialbahn beim fortschreitenden Durchlauf durch den Arbeitsbereich weiter strukturiert wird, indem die Druckelemente (3) vertiefend in die jeweils zugeordnete Mulde der Muldenstruktur eingreifen und so die ersten Strukturelemente vertieft werden,
- die Materialbahn bei dem weiteren Strukturieren gerafft wird, und
- die Materialbahn beim Verlassen des Arbeitsbereiches mittels einer äußeren Kraft von dem zugeordneten Stützelementeträger (7) weggedrückt und im Wesentlichen gerade auslaufend geführt wird.

2. Verfahren nach Anspruch 1, **dadurch gekennzeichnet, dass** die ersten und die zweiten Strukturelemente der Selbstorganisation entsprechend gebildet werden.

3. Verfahren nach Anspruch 1 oder 2, **dadurch gekennzeichnet, dass** als Druckelementeträger (4) eine Druckelementewalze und als zugeordneter Stützelementeträger (7) eine Stützelementewalze verwendet werden.

4. Verfahren nach mindestens einem der vorangehenden Ansprüche, **dadurch gekennzeichnet, dass** sich die Materialbahn (1) beim Durchschlagen nur an Teile der mittels der Stützelemente (5, 6) gebildeten Muldenstruktur anlegt, die im Wesentlichen in Laufrichtung gebildet sind.

5. Verfahren nach mindestens einem der vorangehenden Ansprüche, **dadurch gekennzeichnet, dass** die zweiten Strukturelemente der Materialbahn einer drei-, vier-, sechs- oder achteckigen Form entsprechend gebildet werden

6. Verfahren nach mindestens einem der vorangehenden Ansprüche, **dadurch gekennzeichnet, dass** die Materialbahn in seitlichen Randbereichen in größerem Umfang quer zur Laufrichtung gerafft wird als im mittleren Bereich der Materialbahn.

7. Verfahren nach mindestens einem der vorangehenden Ansprüche, **dadurch gekennzeichnet, dass** die Materialbahn mit gleicher Biegesteifigkeit in und quer zur Laufrichtung gebildet wird, indem die ersten und die zweiten Strukturelemente mit im Wesentlichen gleicher isotroper Tiefe gebildet werden und die ersten Strukturelemente bei dem weiteren Strukturieren in Laufrichtung gerafft werden.

8. Verfahren nach mindestens einem der vorangehenden Ansprüche, **dadurch gekennzeichnet, dass** die Materialbahn beim Strukturieren mit einer oder mehreren Profilkanten versehen wird.

9. Verfahren nach mindestens einem der vorangehenden Ansprüche, **dadurch gekennzeichnet, dass** die Materialbahn als ein Verbund mit Schicht aus einem faserverstärkten Kunststoff im formbaren Zustand zugeführt wird, die zwischen einer oberen und einer unteren Metallschicht angeordnet ist.

10. Verfahren nach Anspruch 9, **dadurch gekennzeichnet, dass** die obere und die untere Metallschicht einer der folgenden Ausführungen entsprechend verwendet werden: primär strukturierte Metallschichten und glatte Metallschichten.

11. Verfahren nach mindestens einem der vorangehenden Ansprüche, **dadurch gekennzeichnet, dass** nach dem weiteren Strukturieren die zweiten Strukturelemente quer zur Laufrichtung tief geprägt wird.

## Claims

1. A method for multidimensionally structuring a flat material strip (1), wherein the method comprises the following steps:
- supplying a flat material strip (1) into a working area of a multidimensional structuring device, wherein:
- the device is realized with a pressure element carrier (4) and an assigned support element carrier (7) that are supported such that they are rotatable in opposite directions and engaged in the working area in order to guide the material strip (1) in a transport direction,
- an at least sectionally coherent trough structure is formed on a curved surface of the assigned support element carrier (7) by means of support elements (5, 6), and
- pressure elements (3) that are realized in a scattered and raised fashion and respectively assigned to one trough of the trough structure are arranged on a curved surface of the pressure element carrier (4),
and
- structuring the material strip (1) while guiding the material strip (1) through the working area along the transport direction,
**characterized in that** during the step for structuring the material strip (1):
- the material strip (1) is pre-structured by means of bending deformation **in that** the material strip (1) locally penetrates into a trough assigned to the respective pressure element (3) on the assigned support element carrier (7) due to the pressure exerted by the pressure elements (3) such that first structure elements, namely spherical caps or troughs, and second structure elements surrounding the first structure elements, namely beads in the case of the spherical caps and folds in the case of the troughs, are formed,
- the local penetration is carried out in the form of open penetrations, during which the material strip (1) only contacts part of the support elements (5, 6) such that the support elements (5, 6) do not simultaneously support the curved material strip from all sides in the region of a structure to be produced, and
- the pre-structured material strip is additionally structured as it advances through the working area **in that** the pressure elements (3) engage deeper into the respectively assigned trough of the trough structure and thusly increase the depth of the first structure elements,
- the material strip is gathered during the additional structuring, and
- the material strip is pressed away from the assigned support element carrier (7) by means of an external force as it exits the work area and guided in an essentially straight fashion at the outlet.

2. The method according to Claim 1, **characterized in that** the first and the second structure elements are realized in accordance with self-organization.

3. The method according to Claim 1 or 2, **characterized in that** a pressure element roller is used as the pressure element carrier (4) and a support element roller is used as the assigned support element carrier (7).

4. The method according to one of the preceding claims, **characterized in that** the material strip (1) only contacts parts of the trough structure realized by means of the support elements (5, 6) that are essentially realized in the transport direction during the penetration.

5. The method according to one of the preceding claims, **characterized in that** the second structure elements of the material strip are realized in accordance with a triangular, quadrangular, hexagonal or octagonal shape.

6. The method according to one of the preceding claims, **characterized in that** the material strip is in lateral edge regions gathered to a greater extent transverse to the transport direction than in the central region of the material strip.

7. The method according to one of the preceding claims, **characterized in that** the material strip is realized with identical flexural strength in and transverse to the transport direction **in that** the first and the second structure elements are realized with essentially identical isotropic depth and the first structure elements are gathered in the transport direction during the additional structuring.

8. The method according to one of the preceding claims, **characterized in that** the material strip is provided with one or more profile edges during the structuring.

9. The method according to one of the preceding claims, **characterized in that** the material strip is supplied in the form of a composite with a layer of a fibre-reinforced plastic in the fictile state that is arranged between an upper and a lower metal layer.

10. The method according to Claim 9, **characterized in that** the upper and the lower metal layer are used in accordance with one of the following designs: primarily structured metal layers and smooth metal layers.

11. The method according to one of the preceding claims, **characterized in that** the second structure elements are raised transverse to the transport direction after the additional structuring.

## Revendications

1. Procédé de structuration multidimensionnelle d'une bande plate de matériau (1), ce procédé comprenant les étapes suivantes :
- acheminement d'une bande plate de matériau (1) dans une zone opératoire d'un dispositif de structuration multidimensionnelle,
- le dispositif étant constitué d'un support d'élément de pression (4) et d'un support d'élément d'appui associé (7) qui ont un appui rotatif pour guider la bande de matériau (1) à contre-sens dans un sens de circulation et s'engrènent dans la zone opératoire,
- sur une surface courbée du support d'élément d'appui associé (7), une structure à creux se tenant au moins par sections est constituée au moyen d'éléments d'appui (5, 6) et,
- sur une surface courbée du support d'élément de pression (4), sont disposés des éléments de pression (3) qui ont une conformation saillante individualisée et sont respectivement associés à un creux de la structure à creux
et
- structuration de la bande de matériau (1) lors du passage de la bande de matériau (1) dans la zone opératoire en suivant le sens de circulation,
**caractérisé en ce que**, dans l'étape de structuration de la bande de matériau (1) :
- la bande de matériau (1) est préstructurée par une déformation par flexion par le fait que la bande de matériau (1), suite à une sollicitation de pression exercée par les éléments de pression (3), transperce passe localement dans un creux associé à l'élément de pression respectif (3) sur le support d'élément d'appui associé (7) de manière à ce que les premiers éléments de structure, à savoir des calottes ou des creux, et les seconds éléments de structure entourant les premiers éléments de structure soient constitués, à savoir des bourrelets dans le cas des calottes et des plis dans le cas des creux,
- la traversée locale se fait par des percées ouvertes dans lesquelles la bande de matériau (1) ne se pose que sur une partie des éléments d'appui (5, 6), de sorte que les éléments d'appui (5, 6) ne soutiennent pas simultanément de tous les côtés la bande de matériau courbée au niveau d'une structure à créer et
- la bande de matériau préstructurée continue à être structurée lors de la poursuite du passage dans la zone opératoire par le fait que les éléments de pression (3) s'engrènent en profondeur dans le creux respectivement associé de la structure à creux et que les premiers éléments de structure sont ainsi enfoncés,
- la bande de matériau est retroussée lors de la poursuite de la structuration et
- la bande de matériau, en quittant la zone opératoire, est repoussée au moyen d'une force extérieure du support d'élément d'appui associé (7) et est guidée sensiblement en sortant en ligne droite.

2. Procédé selon la revendication 1, **caractérisé en ce que** les premier et second éléments de structure sont réalisés sur le principe de l'auto-organisation.

3. Procédé selon la revendication 1 ou 2, **caractérisé en ce qu'**on utilise comme supports d'éléments de pression (4) un cylindre à élément de pression et comme support d'éléments d'appui associés (7) un cylindre à élément d'appui.

4. Procédé selon au moins une des revendications précédentes, **caractérisé en ce que** la bande de matériau (1), en traversant, ne se pose que sur des parties de la structure à creux formée au moyen des éléments d'appui (5, 6) qui sont formés sensiblement dans le sens de circulation.

5. Procédé selon au moins une des revendications précédentes, **caractérisé en ce que** les seconds éléments de structure de la bande de matériau sont constitués en forme triangulaire, quadrangulaire, hexagonale ou octogonale.

6. Procédé selon au moins une des revendications précédentes, **caractérisé en ce que** la bande de matériau est plus retroussée transversalement par rapport au sens de circulation sur ses bords latéraux qu'au centre de la bande de matériau.

7. Procédé selon au moins une des revendications précédentes, **caractérisé en ce que** la bande de matériau est constituée avec la même résistance à la flexion dans le sens de circulation et transversalement par rapport à celui-ci par le fait que les seconds éléments de structure sont constitués avec une profondeur isotrope sensiblement égale et que les premiers éléments de structure sont retroussés dans le sens de circulation lors de la poursuite de la structuration.

8. Procédé selon au moins une des revendications précédentes, **caractérisé en ce que** la bande de matériau est pourvue d'un ou plusieurs bords profilés lors de la structuration.

9. Procédé selon au moins une des revendications précédentes, **caractérisé en ce que** la bande de matériau est acheminée sous forme d'un composite comportant une couche de plastique renforcé aux fibres en état malléable et qui est disposée entre une couche métallique supérieure et une couche métallique inférieure.

10. Procédé selon la revendication 9, **caractérisé en ce que** les couches métalliques inférieure et supérieure sont utilisées suivant un des modèles suivants : couches métalliques structurées au niveau primaire et couches métalliques lisses.

11. Procédé selon au moins une des revendications précédentes, **caractérisé en ce que**, après la poursuite de la structuration, les seconds éléments de structure sont gaufrés en profondeur transversalement par rapport au sens de circulation.
